# EUROPEAN PATENT APPLICATION

(11) **EP 4 586 371 A1**
(43) Date of publication of application: **16.07.2025**
(21) Application number: 23880288.8
(22) Date of filing: 20.10.2023
(51) Int. Cl.: H01M 10/6568, H01M 10/647, H01M 10/613, H01M 50/211, H01M 50/24, H01M 50/682

(54) **BATTERY MODULE AND BATTERY PACK INCLUDING SAME**

(30) Priority: 20.10.2022 KR 20220135644; 19.10.2023 KR 20230140469
(71) Applicant: LG Energy Solution, Ltd., Seoul 07335 (KR)
(72) Inventor: UM, Taeki, Daejeon 34122 (KR); LEE, Jung Hoon, Daejeon 34122 (KR); KIM, Dooseung, Daejeon 34122 (KR); RYU, Jaeuk, Daejeon 34122 (KR)
(74) Representative: Plasseraud IP
(86) International application number: PCT/KR2023/016351
(87) International publication number: WO 2024/085713

(57) **Abstract**

The battery module according to one embodiment of the present disclosure includes a battery cell stack that includes a first battery cell stack and a second battery cell stack in which a plurality of battery cells are stacked; a module frame that houses the battery cell stack; and an inlet and an outlet that circulate a coolant inside the module frame, wherein the coolant flows into the inside of the module frame through the inlet, and is discharged through the outlet, and wherein an insulating plate is arranged between the first battery cell stack and the second battery cell stack, and an opening through which the coolant passes is formed in the insulating plate.

## Description

### [TECHNICAL FIELD]

### Cross Citation with Related Application(s)

This application claims priority to and the benefit of Korean Patent Application No. 10-2022-0135644 filed on October 20, 2022 and Korean Patent Application No. 10-2023-0140469 filed on October 19, 2023 in the Korean Intellectual Property Office, the disclosures of which are hereby incorporated by reference in their entirety.

The present disclosure relates to a battery module and a battery pack including the same, and more particularly, to a battery module having improved cooling efficiency and safety, and a battery pack including the same.

### [BACKGROUND]

As the technology development of and the demand for mobile devices have increased, the demand for secondary batteries as energy sources has rapidly increased. A variety of researches on batteries capable of meeting various needs have been carried out accordingly.

A secondary battery has attracted considerable attention as an energy source for power-driven devices, such as an electric bicycle, an electric vehicle, and a hybrid electric vehicle, as well as an energy source for mobile devices, such as a mobile phone, a digital camera, and a laptop computer.

In recent years, along with a continuous rise of the necessity for a large-capacity secondary battery structure, including the utilization of the secondary battery as an energy storage source, there is a growing demand for a battery pack of a multi-module structure which is an assembly of battery modules in which a plurality of secondary batteries are connected in series and/or in parallel.

On the other hand, when a plurality of battery cells are connected in series or in parallel to configure a battery pack, it is common to configure a battery module composed of at least one battery cell first and then configure a battery pack by using at least one battery module and adding other components.

Since battery cells constituting such a medium- or large-sized battery module are composed of secondary batteries which can be charged and discharged, such a high-output large-capacity secondary battery generates a large amount of heat during a charging and discharging process. In this case, heat generated from multiple battery cells can be added up in a narrow space, so that the temperature can rise more quickly and excessively. In other words, battery modules in which multiple battery cells are stacked and a battery pack equipped with these battery modules can obtain high output, but it is not easy to remove heat generated from the battery cells during charge and discharge. When the heat dissipation of battery cells is not properly performed, deterioration of the battery cells is accelerated, the life is shortened, and the possibility of explosion or ignition increases.

Moreover, in the case of a battery module included in a vehicle battery pack, it is frequently exposed to direct sunlight and may be placed under high-temperature conditions such as summer or desert areas. Further, since multiple battery modules are concentratedly arranged to increase the mileage of the vehicle, a flame or heat generated in any one of the battery modules can easily propagate to an adjacent battery module, which may eventually lead to ignition or explosion of the battery pack itself.

Further, since the battery pack is constructed by combining multiple battery modules, it is heavy and unsuitable for loading multiple batteries into a moving means such as an automobile, and thus, it is necessary to improve energy density.

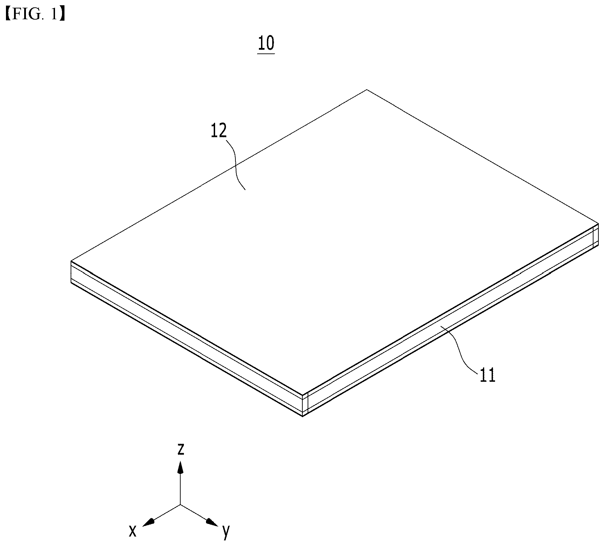

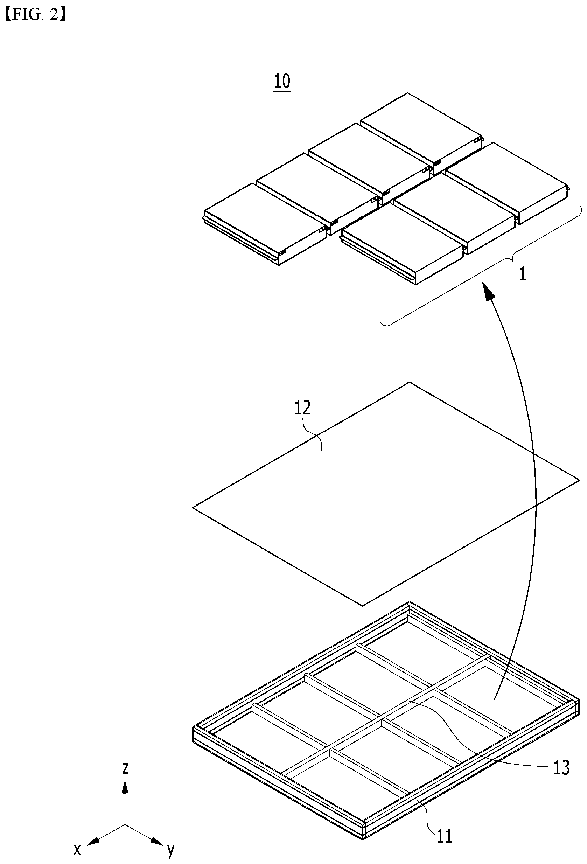

FIG. 1 is a diagram showing a conventional battery pack. FIG. 2 is an exploded perspective view of the battery pack of FIG. 1.

Referring to FIGS. 1 and 2, a conventional battery pack 10 includes a lower pack frame 11 on which a plurality of battery modules 1 are mounted, an upper pack frame 12 located on an upper part of the battery module 1, and an internal beam 13 that partitions the position where the battery module 1 is mounted within the battery pack 10.

When the battery module 1 is mounted within the battery pack 10 in this way, since the energy density of the battery pack 10 may be reduced due to the internal beams 13 that partition between the battery modules 1. Therefore, there is a problem that a greater number of battery packs 10 must be provided in order to satisfy the efficiency required for devices, and the like. Furthermore, due to the weight of the battery packs 10, there is a limit to the number of battery packs 10 that can be provided in a device. Therefore, in order to reduce the weight of the battery pack 10 and at the same time increase the energy density of the battery pack 10, there is a need to mount a greater number of battery modules 1 within the battery pack 10.

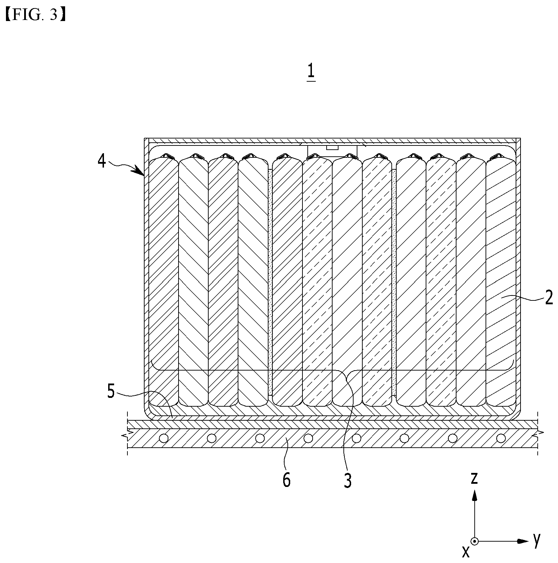

FIG. 3 is a cross-sectional view showing a cross section of one of the battery modules included in the battery pack of FIG. 2.

Referring to FIG. 3, a conventional battery module 1 includes a battery cell stack 3 including battery cells 2 stacked in a preset direction, and a module frame 4 that houses the battery cell stack 3, wherein the battery cell stack 3 is fixedly located on a thermally conductive resin layer 5 located on a lower surface of the module frame 4. In this case, a heat sink 6 located below the bottom part of the module frame 4 may be provided to cool the heat generated from the battery cell stack 3.

However, since the heat sink 6 does not receive and transfer heat while being in direct contact with the battery cell stack 3, it has the disadvantage that its cooling efficiency is not very high. In particular, an air gap may be formed between the bottom part of the module frame 4 and the thermally conductive resin layer 5, which is a factor that hinders heat transfer. There is a need develop a method to more effectively cool the battery module 1.

Putting the above together, more effective methods for improving the cooling efficiency of the battery module are needed.

### [DETAILED DESCRIPTION OF THE INVENTION]

### [Technical Problem]

It is an object of the present disclosure to provide a battery module that is improved in cooling efficiency and enhanced in cooling performance, and a battery pack including the same.

However, the technical problems to be solved by embodiments of the present disclosure are not limited to the above-described problems, and can be variously expanded within the scope of the technical idea included in the present disclosure.

### [Technical Solution]

According to one embodiment of the present disclosure, there is provided a battery module comprising: a battery cell stack that includes a first battery cell stack and a second battery cell stack in which a plurality of battery cells are stacked; a module frame that houses the battery cell stack; and an inlet and an outlet that circulate a coolant inside the module frame, wherein the coolant flows into the inside of the module frame through the inlet, and is discharged through the outlet, and wherein an insulating plate is arranged between the first battery cell stack and the second battery cell stack, and an opening through which the coolant passes is formed in the insulating plate.

The opening may be formed in the center of the insulating plate.

The inlet and the outlet may be located on opposite sides to each other on the basis of the insulating plate.

The first battery cell stack may be located between the inlet and the insulating plate, and the second battery cell stack may be located between the outlet and the insulating plate.

The coolant flowing through the inlet may sequentially pass through the first battery cell stack, the opening of the insulating plate, and the second battery cell stack, and is discharged through the outlet.

The inlet may be located below the center part on the basis of the height of the battery cell stack, and the outlet may be located above the center part on the basis of the height of the battery cell stack.

The first battery cell stack and the second battery cell stack may be arranged along a direction perpendicular to the direction in which the battery cells in the first battery cell stack or the second battery cell stack are stacked.

A first through hole and a second through hole may be formed in the insulating plate, and electrical connection between the first battery cell stack and the second battery cell stack may be made through the first through hole and the second through hole.

The battery module may further comprise a first sealing assembly and a second sealing assembly respectively covering the opened both sides of the module frame. The inlet may be formed in the first sealing assembly, and the outlet may be formed in the second sealing assembly.

The inlet may be located below the center part on the basis of the height of the first sealing assembly, and the outlet may be located above the center part on the basis of the height of the second sealing assembly.

The battery cell is a pouch-type battery cell, and may include electrode leads protruding in both directions. When the direction between the electrode leads is defined as a longitudinal direction, the first sealing assembly, the first battery cell stack, the insulating plate, the second battery cell stack, and the second sealing assembly may be sequentially located along the longitudinal direction.

The coolant may be an insulating oil.

The coolant may be in direct contact with the battery cell stack housed within the module frame.

The insulating plate may have a configuration in which the insulating plate surrounds the periphery of the opening formed in the center of the insulating plate.

The opening may be opened so as to have an area of 5% or more and 60% or less relative to the area of one surface of the insulating plate.

The length from the upper side of the insulating plate to the upper side of the opening may be 25% or more and 49% or less of the length according to the height direction of the insulating plate. The length from the lower side of the insulating plate to the lower side of the opening may be 25% or more and 49% or less of the length according to the height direction of the insulating plate.

A tilted surface may be formed in at least a part of the area from an upper side of the insulating plate to an upper side of the opening, such that the thickness of the insulating plate becomes narrower as it goes in the direction from the upper side of the insulating plate to the upper side of the opening.

A tilted surface may be formed in at least a part of the area from a lower side of the insulating plate to a lower side of the opening, such that the thickness of the insulating plate becomes narrower as it goes in the direction from the lower side of the insulating plate to the lower side of the opening.

The insulating plate may include at least one rib extending along the height direction of the insulating plate.

The battery module may further comprise a first busbar frame located on one surface of the first battery cell stack and a second busbar frame located on one surface of the second battery cell stack. The insulating plate may be fixed to at least one of the first busbar frame or the second busbar frame.

According to another embodiment of the present disclosure, there is provided a battery pack comprising the above-mentioned battery module.

### [Advantageous Effects]

According to the embodiments, the battery cells can be directly cooled with a coolant to thereby increase the cooling efficiency of the battery module and the battery pack including the same.

Further, a plurality of battery cell stacks can be arranged along the longitudinal direction within the battery module to thereby increase energy density, and an insulating plate formed with an opening can be arranged between the plurality of battery cell stacks to thereby improve flowability of the coolant.

Effects obtainable from the present disclosure are not limited to the effects mentioned above, and additional other effects not mentioned herein will be clearly understood from the description and the appended drawings by those skilled in the art.

### [BRIEF DESCRIPTION OF THE DRAWINGS]

FIG. 1 is a perspective view showing a conventional battery pack.
FIG. 2 is an exploded perspective view of the battery pack of FIG. 1.
FIG. 3 is a cross-sectional view showing a cross section of one of the battery modules included in the battery pack of FIG. 2.
FIG. 4 is a perspective view of a battery module according to an embodiment of the present disclosure.
FIG. 5 is an exploded perspective view of the battery module of FIG. 4.
FIG. 6 is a perspective view showing the battery cell stack and the first and second busbar assemblies included in the battery module of FIG. 5.
FIG. 7 is a plan view showing one of the battery cells included in the battery cell stack of FIG. 6.
FIG. 8 is a perspective view showing a first battery cell stack and a first busbar assembly included in the battery module of FIG. 6.
FIG. 9 is an exploded perspective view of a first battery cell stack and a first busbar assembly of FIG. 8.
FIG. 10 is a perspective view showing a state in which side plates are further arranged on the battery cell stack and the first and second busbar assemblies of FIG. 6.
FIG. 11 is an exploded perspective view which separately shows a first battery cell stack and a second battery cell stack included in the battery cell stack of FIG. 10.
FIG. 12 is a perspective view showing a state in which the battery cell stack, first and second busbar assemblies, and side plates of FIG. 10 are inserted into the module frame.
FIG. 13 is a partial view which shows A1 in FIG. 6 in an enlarged manner.
FIG. 14 is a partial view which shows A2 in FIG. 6 in an enlarged manner.
FIG. 15 is a diagram showing the current movement path between the first battery cell stack and the second battery cell stack.
FIG. 16 is a perspective view showing a state in which the first sealing assembly is mounted on one side of the module frame according to an embodiment of the present disclosure.
FIG. 17 is a diagram showing the process of assembling the first sealing assembly of FIG. 16.
FIG. 18 is a diagram showing a process in which the first sealing assembly of FIG. 16 is mounted on one surface of the module frame.
FIG. 19 is an exploded perspective view showing a state in which the first end plate is mounted on the first seal assembly according to an embodiment of the present disclosure.
FIG. 20 is a diagram of the configuration excluding the first end plate in FIG. 19 as viewed along the -x axis direction on the yz plane.
FIG. 21 is a cross-sectional view showing a portion corresponding to A5 in the cross sections taken along the cutting line B-B' in FIG. 20.
FIG. 22 is a diagram showing a state in which the second sealing assembly is mounted on the other side of the module frame according to an embodiment of the present disclosure.
FIG. 23 is an exploded perspective view showing a state in which the second end plate is mounted on the second sealing assembly according to an embodiment of the present disclosure.
FIG. 24 is a diagram of the configuration excluding the second end plate in FIG. 23 as viewed along the x-axis direction on the yz plane.
FIG. 25 is a cross-sectional view showing a portion corresponding to A6 in the cross sections taken along the cutting line C-C' of FIG. 24.
FIG. 26 is an exploded perspective view of a second sealing assembly according to another embodiment of the present disclosure.
FIG. 27 is a diagram when FIG. 26 is viewed along the -x axis direction on the yz plane.
FIG. 28 is a diagram showing a state in which a second end plate is coupled to the second sealing assembly of FIG. 26.
FIG. 29 is a partial perspective view showing the insulating plate located between the first battery cell stack and the second battery cell stack in FIG. 11 in an enlarged manner.
FIG. 30 is a partial perspective view showing an insulating plate included in a battery module according to another embodiment of the present disclosure.
FIGS. 31 (a) and (b) are diagrams showing a cross section of a battery module according to a comparative example of the present disclosure and a cross section of a battery module according to an embodiment of the present disclosure, respectively.
FIG. 32 is a perspective view showing an insulating plate according to an embodiment of the present disclosure.
FIGS. 33 and 34 are a perspective view and a front view of an insulating plate according to a modification of the present disclosure.
FIG. 35 is a cross-sectional view taken along the cutting line D-D' of FIG. 34.
FIG. 36 is a partial view which shows a portion corresponding to A7 in FIG. 35 in an enlarged manner.

### [DETAILED DESCRIPTION OF THE EMBODIMENTS]

Hereinafter, various embodiments of the present disclosure will be described in detail with reference to the accompanying drawings so that those skilled in the art can easily carry out them. The present disclosure may be modified in various different ways, and is not limited to the embodiments set forth herein.

A description of portions that are not related to the description will be omitted for clarity, and same reference numerals designate same or like elements throughout the description.

Further, in the drawings, the size and thickness of each element are arbitrarily illustrated for convenience of description, and the present disclosure is not necessarily limited to those illustrated in the drawings. In the drawings, the thickness of layers, areas, etc. are exaggerated for clarity. In the drawings, for convenience of description, the thicknesses of a part and an area are exaggerated.

Further, it will be understood that when an element such as a layer, film, region, or plate is referred to as being "on" or "above" another element, it can be directly on the other element or intervening elements may also be present. In contrast, when an element is referred to as being "directly on" another element, it means that other intervening elements are not present. Further, a certain part being located "above" or "on" a reference portion means the certain part being located above or below the reference portion and does not particularly mean the certain part "above" or "on" toward an opposite direction of gravity.

Further, throughout the description, when a portion is referred to as "including" or "comprising" a certain component, it means that the portion can further include other components, without excluding the other components, unless otherwise stated.

Further, throughout the description, when referred to as "planar", it means when a target portion is viewed from the upper side, and when it is referred to as "cross-sectional", it means when a target portion is viewed from the side of a cross section cut vertically.

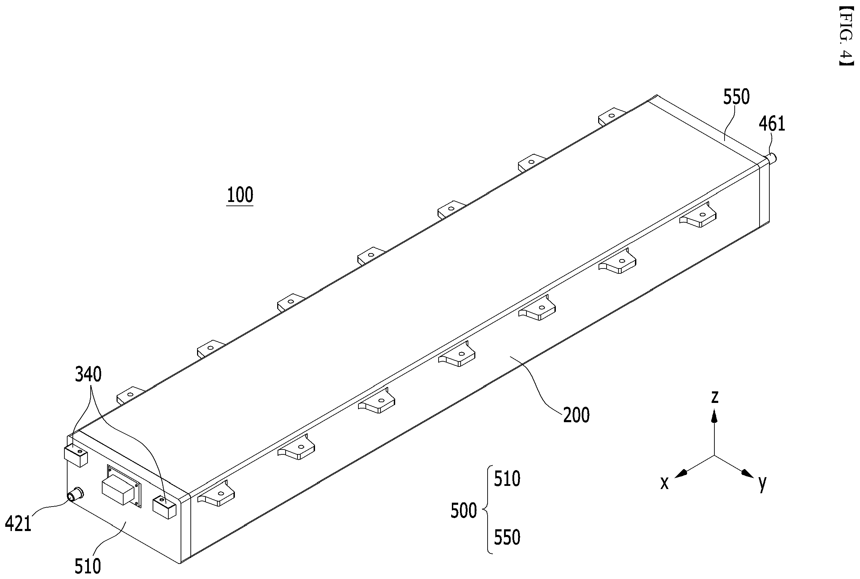

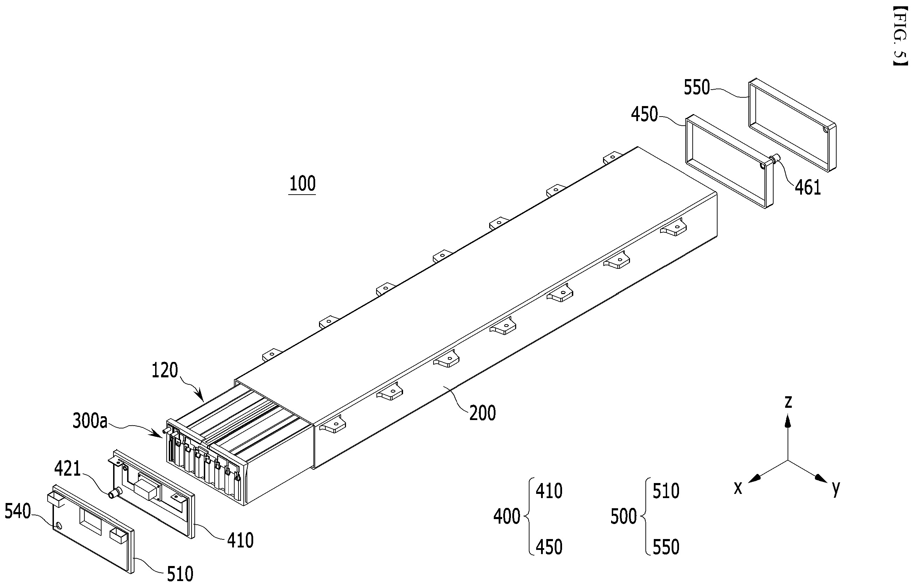

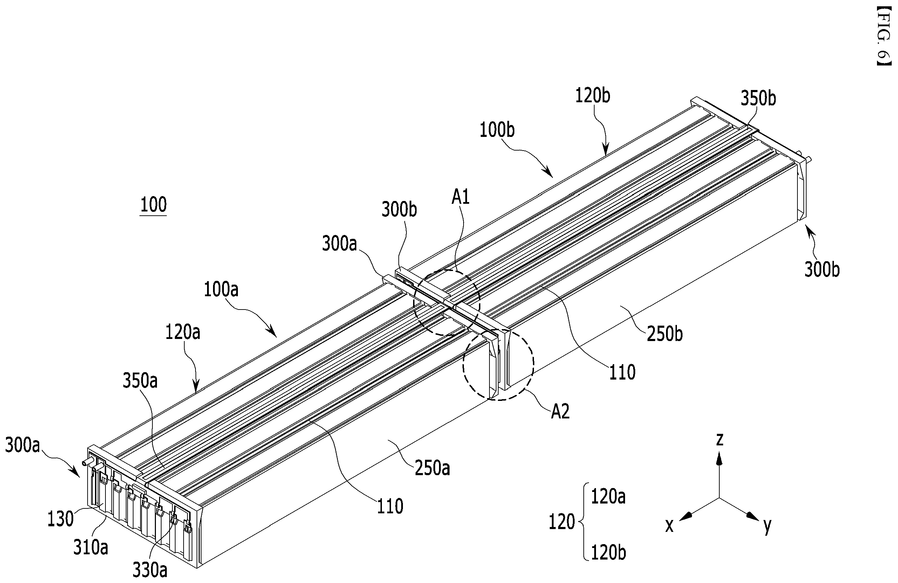

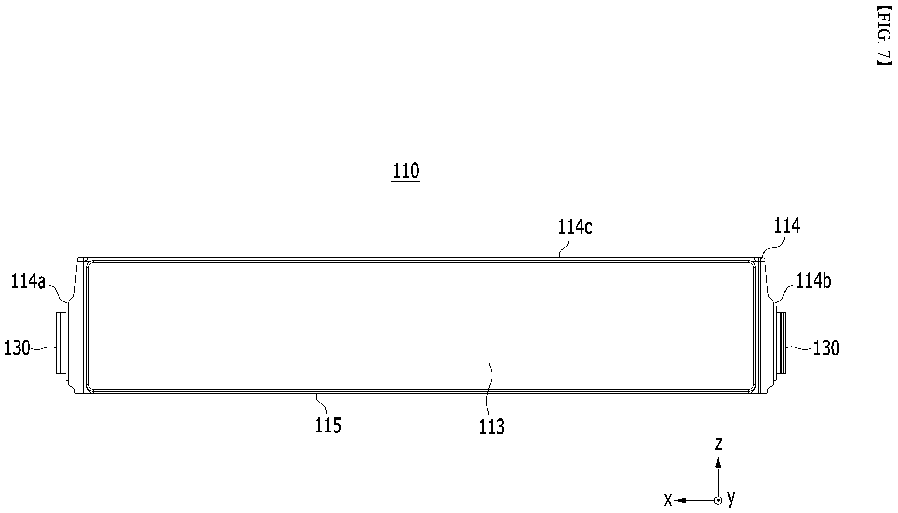

FIG. 4 is a perspective view of a battery module according to an embodiment of the present disclosure. FIG. 5 is an exploded perspective view of the battery module of FIG. 4. FIG. 6 is a perspective view showing the battery cell stack and the first and second busbar assemblies included in the battery module of FIG. 5. FIG. 7 is a plan view showing one of the battery cells included in the battery cell stack of FIG. 6.

Referring to FIGS. 4 to 7, a battery module 100 according to an embodiment of the present disclosure comprises a battery cell stack 120 including a first battery cell stack 120a and a second battery cell stack 120b; a module frame 200 that houses the battery cell stack 120; and an inlet and an outlet that circulate a coolant inside the module frame 200. The first battery cell stack 120a and the second battery cell stack 120b are formed by stacking a plurality of battery cells 110. The coolant, the inlet, and the outlet will be described later.

First, the battery cell 110 may be a pouch-type battery cell, and may include electrode leads 130 protruding in both directions. Such a pouch-type battery cell may be formed by housing an electrode assembly in a pouch case made of a laminate sheet including a resin layer and a metal layer, and then adhering the outer peripheral part of the pouch case. Such a battery cell 110 may have a rectangular sheet structure. Specifically, the battery cell 110 according to the present embodiment has a structure in which two electrode leads 130 protrude from one end 114a and the other end 114b of the battery main body 113, respectively. More specifically, the electrode leads 130 may protrude in opposite directions to each other, wherein one of such electrode leads 130 may be a cathode lead, and the other may be an anode lead. In the present embodiment, the direction between the electrode leads 130 protruding in both directions of the battery cell 110 is referred to as the longitudinal direction of the battery cell 110. In one example, referring to FIGS. 6 and 7, the direction parallel to the x-axis may correspond to the longitudinal direction of the battery cell 110.

The battery cell 110 can be produced by adhering both ends 114a and 114b of a battery case 114 and one side part 114c connecting them in a state in which an electrode assembly (not shown) is housed in a battery case 114. In other words, the battery cell 110 according to an embodiment of the present disclosure has a total of three sealing parts, the sealing parts have a structure that is sealed by a method such as fusion, and the remaining other one side part may be composed of a folding part 115.

Such a battery cell 110 may be configured in a plural numbers, and the plurality of battery cells 110 may be stacked so as to be electrically connected to each other, thereby forming a battery cell stack 120. The battery cell stack 120 includes a first battery cell stack 120a and a second battery cell stack 120b. Particularly, while the battery cells 110 stand upright, the battery cells 110 may be stacked along one direction in a state where one surfaces of the battery main body 113 face each other. More specifically, as shown in FIGS. 4 to 7, the battery cells 110 can be stacked in an upright state from one side surface part of the module frame 200 to the other so that one surface of the battery main body 113 of the battery cell 110 is parallel to the side surface parts of the module frame 200. As an example, a state in which a plurality of battery cells 110 are stacked along a direction parallel to the y-axis is illustrated. When a plurality of battery cells 110 are stacked along the direction parallel to the y-axis in this way, the electrode leads 130 in one battery cell 110 protrude along the x-axis direction and the -x-axis direction, respectively.

In one area, a plurality of battery cells 110 are stacked along a direction parallel to the y-axis to form a first battery cell stack 120a, and in the other area, a plurality of battery cells 110 may be stacked along a direction parallel to the y-axis to form a second battery cell stack 120b.

The cell case 114 is generally formed in a laminated structure of resin layer/metal thin film layer/resin layer. For example, when the surface of the cell case is formed of an O (oriented)-nylon layer, it tends to slide easily due to external impact when stacking a plurality of battery cells to form a medium- and large-sized battery module. Therefore, in order to prevent this problem and maintain a stable stacked structure of battery cells, a tacky adhesive such as a double-sided tape or a chemical adhesive that bonds through chemical reactions during adhesion can be attached to the surface of the battery case to form a first battery cell stack 120a and a second battery cell stack 120b.

On the other hand, the first battery cell stack 120a and the second battery cell stack 120b are arranged along a direction perpendicular to the direction in which the battery cells 110 in the first battery cell stack 120a or the second battery cell stack 120b are stacked. In other words, the first battery cell stack 120a and the second battery cell stack 120b may be arranged along the direction in which the electrode leads 130 protrude with respect to the battery cell 110. That is, the first battery cell stack 120a and the second battery cell stack 120b are arranged along the longitudinal direction of the battery cell 110. For example, as shown in FIG. 6, when a plurality of battery cells 110 are stacked along a direction parallel to the y-axis to form the first battery cell stack 120a and the second battery cell stack 120b, the first battery cell stack 120a and the second battery cell stack 120b may be located along a direction parallel to the x-axis.

The module frame 200 may be for protecting the battery cell stack 120 and the electrical equipment connected thereto from external physical impact. The battery cell stack 120 and electrical components connected thereto may be housed in the internal space of the module frame 200.

The structure of the module frame 200 may vary. According to an embodiment of the present disclosure, the structure of the module frame 200 may be a mono frame structure. Herein, the mono frame may be in the form of a metal plate in which the upper surface, the lower surface and the both side surfaces are integrated. The mono frame can be manufactured by extrusion molding.

However, the structure of the module frame 200 is not limited thereto, and in another example, the module frame 200 may have a structure in which a U-shaped frame and an upper plate are coupled. **In** this case, the U-shaped frame may have a lower surface and both side surfaces extending upward from both edges of the lower surface, and the upper plate may have a plate shape. At this time, each frame or plate constituting the U-shaped frame may be manufactured by press molding. Further, the structure of the module frame 200 may be provided in a mono frame or an L-shaped frame structure in addition to a U-shaped frame, and may be provided in various structures that are not described in the above-mentioned examples.

The module frame 200 may have a configuration in which both sides are opened. More specifically, the module frame 200 may be provided in an opened configuration along the longitudinal direction of the battery cell 110. In this case, the front surface and the rear surface of the battery cell stack 120 may not be covered by the module frame 200. The front surface and the rear surface of the battery cell stack 120 may be covered by the first and second busbar assemblies 300a and 300b, the sealing assembly 400, or the end plate 500, which will be described later, whereby the front surface and the rear surface of the battery cell stack 120 can be protected from external physical impact, and the like.

The battery module 100 may include first busbar assemblies 300a located on one side and the other side of the first battery cell stack 120a, and second busbar assemblies 300b located on one side and the other side of the second battery cell stack 120b. Specifically, the first busbar assemblies 300a may be located in a direction in which the electrode leads 130 of the battery cells 110 included in the first battery cell stack 120a protrude. Further, the second busbar assemblies 300b may be located in a direction in which the electrode leads 130 of the battery cells 110 included in the second battery cell stack 120b protrude. The first busbar assembly 300a and the second busbar assembly 300b may each include a busbar frame, a busbar, and a terminal busbar, which will be described later.

The battery module 100 may include a sealing assembly 400. The sealing assembly 400 may be located on the opened both sides of the module frame 200, and may be formed to cover the battery cell stack 120. The sealing assembly 400 located on one open side of the module frame 200 is a first sealing assembly 410, and the sealing assembly 400 located on the other open side of the module frame 200 may be a second sealing assembly 450. That is, the battery module 100 according to the present embodiment may further include a first sealing assembly 410 and a second sealing assembly 450 that cover the opened both sides of the module frame 200, respectively.

The sealing assembly 400 may separate the opened both sides of the module frame 200 from the external environment. Specifically, when a coolant is injected into the inside of the module frame 200, which will be described later, the sealing assembly 400 may serve to seal the coolant so as to prevent it from leaking to the outside.

The end plate 500 may be located on the opened both sides of the module frame 200 to cover the sealing assembly 400. The end plate 500 located on the opened one side of the module frame 200 is a first end plate 510, and the end plate 500 located on the opened other side of the module frame 200 may be a second end plate 550.

This end plate 500 can physically protect the battery cell stack 120 and other electrical components from external impact.

Next, the components included in the battery module 100 of the present embodiment will be described in detail.

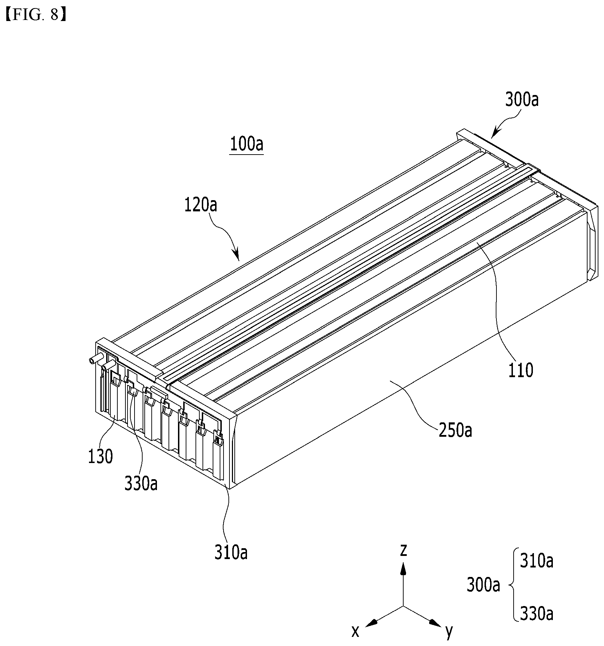

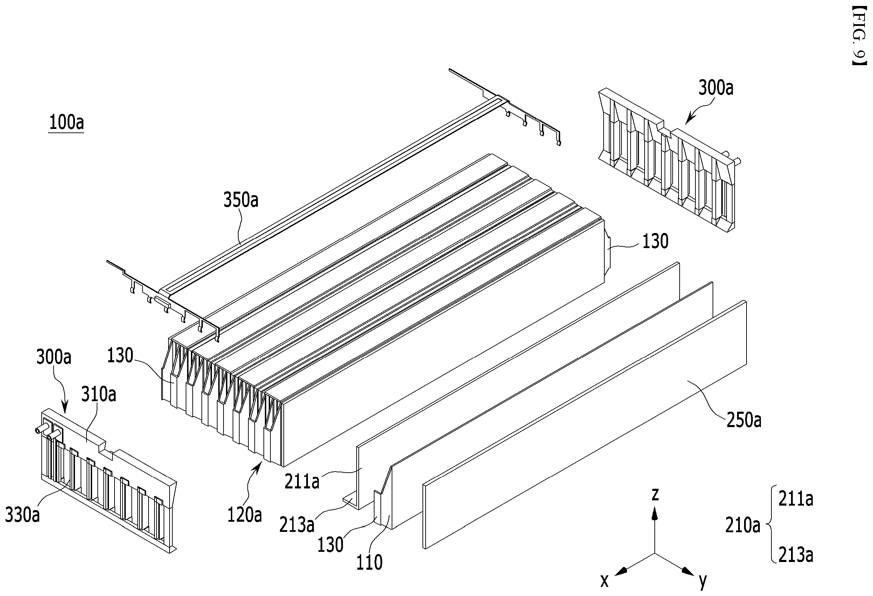

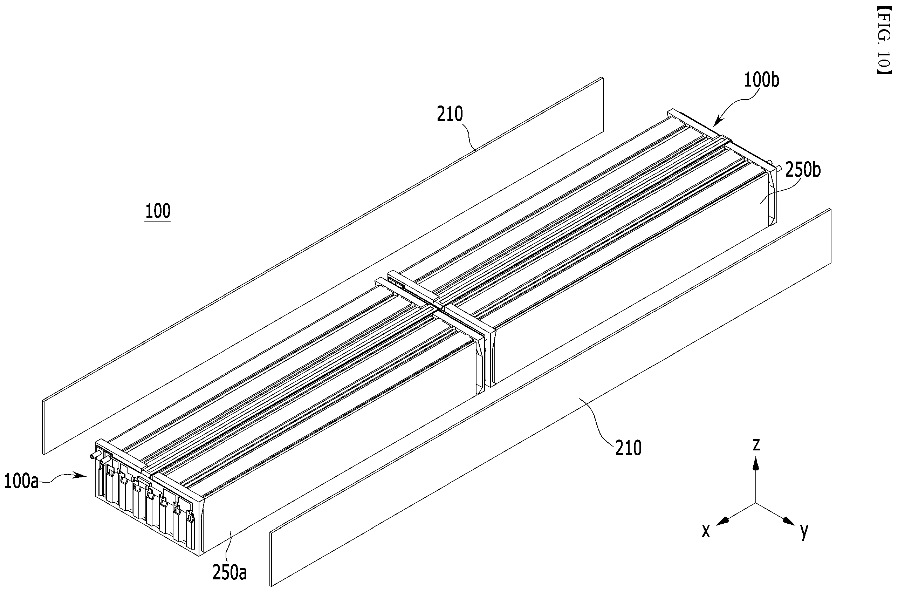

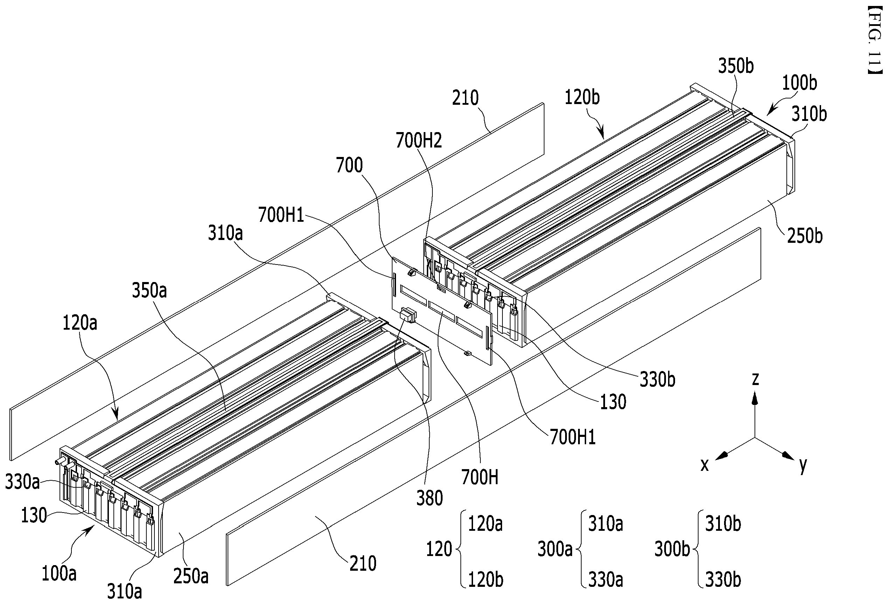

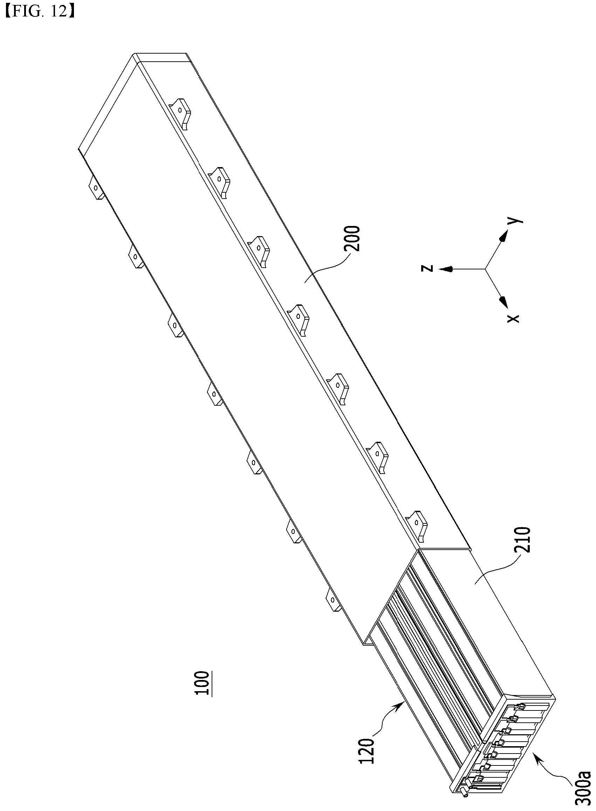

FIG. 8 is a perspective view showing a first battery cell stack and a first busbar assembly included in the battery module of FIG. 6. FIG. 9 is an exploded perspective view of a first battery cell stack and a first busbar assembly of FIG. 8. FIG. 10 is a perspective view showing a state in which side plates are further arranged on the battery cell stack and the first and second busbar assemblies of FIG. 6. FIG. 11 is an exploded perspective view which separately shows a first battery cell stack and a second battery cell stack included in the battery cell stack of FIG. 10. FIG. 12 is a perspective view showing a state in which the battery cell stack, first and second busbar assemblies, and side plates of FIG. 10 are inserted into the module frame.

Referring to FIGS. 6 and 8 to 12 together, as described above, the battery cell stack 120 includes a first battery cell stack 120a and a second battery cell stack 120b that are arranged along the longitudinal direction of the battery cell 110. Further, first busbar assemblies 300a may be located on each of one side and the other side of the first battery cell stack 120a, and second busbar assemblies 300b may be located on each of one side and the other side of the second battery cell stack 120b.

At this time, the first battery cell stack 120a and the first busbar assembly 300a may be collectively referred to as a first sub-module 100a, and the second battery cell stack 120b and the second busbar assembly 300b may be collectively referred to as a second sub-module 100b. Specifically, the battery module 100 according to the present embodiment may be one in which the first sub-module 100a and the second sub-module 100b arranged inside the module frame 200 are electrically coupled to each other.

First, the first sub-module 100a may include a first battery cell stack 120a and a first busbar assembly 300a. First busbar assemblies 300a may be located on each of one side and the other side of the first battery cell stack 120a. The first busbar assemblies 300a may be located in a direction in which the electrode leads 130 of the battery cells 110 included in the first battery cell stack 120a protrude. Further, a first flexible printed circuit board (FPCB) 350a may be provided, which is electrically connected to the first busbar assemblies 300a.

The first battery cell stack 120a may include a plurality of battery cells 110, at least one first cooling fin 210a located between the plurality of battery cells 110, and a first compression pad 250a provided on one surface of the battery cell 110 located at the outermost side of the battery cells 110.

The first cooling fin 210a may be located between the plurality of battery cells 110. For example, the first cooling fin 210a may be located between two battery cells 110. Specifically, one first cooling fin 210a and the other first cooling fin 210a adjacent thereto may be located with two battery cells 110 being interposed between them.

The first cooling fin 210a may include a first plate 211a in contact with one side surface of the battery cell 110. Here, one side surface of the battery cell 110 is one surface of the battery main body 113 (see FIG. 7) of the battery cell 110, and may be one surface of the battery cell 110 extending along the longitudinal direction (x-axis direction).

One surface of the first plate 211a may be in contact with one side surface of the battery cell 110 facing one surface of the first plate 211a. The other surface of the first plate 211a may be in contact with one surface of the other battery cell 110 adjacent thereto while facing the other surface of the first plate 211a. In this case, although not illustrated in this figure, an adhesive member is interposed between the side surface of the battery cell 110 and the first plate 211a, so that the battery cell 110 and the first plate 211a can be adhesively fixed. For example, the adhesive member may be an insulating tape.

The upper surface (z-axis direction) of the first plate 211a may be in contact with the upper surface of the module frame 200, and the lower surface of the first plate 211a may be in contact with the lower surface of the module frame 200. Thereby, the first cooling fin 210a can be fixedly located within the module frame 200, whereby the battery cell 110 attached to the first cooling fin 210a can also be fixedly located within the module frame 200.

When the size of the first plate 211a is larger than the size of the battery cell 110, the upper part and the lower part of the battery cell 110 may be located with prescribed interval apart from the upper part and the lower part of the module frame 200. Specifically, when the height of the first plate 211a is longer than the height of the battery cell 110, the battery cell 110 can be adhesively fixed while being located at the center part of the first plate 211a. In this case, the upper part and the lower part of the battery cell 110 may be located with prescribed interval apart from the upper surface and the lower surface of the module frame 200. Here, the height of the battery cell 110 and the first plate 211a refers to the length in the z-axis direction.

The first cooling fin 210a may further include a first plate 211a and a first protrusion part 213a where one end of the first plate 211a protrudes. As an example, the first cooling fin 210a may have an L shape. Specifically, referring to FIG. 9, the first cooling fin 210a may include a first plate 211a having a surface corresponding to or larger than one side surface of the battery cell 110, and a first protrusion part 213a that protrudes from one end of the first plate 211a to be in parallel to the stacking direction (y-axis direction) of the first battery cell stack 120a.

The first protrusion part 213a may be one area protruding in a direction perpendicular to the first plate 211a, and may be in contact with at least one of the upper surface or the lower surface of the module frame 200. Specifically, one surface of the first protrusion part 213a may be located facing the upper part or the lower surface of the battery cell 110, and the other surface of the first protrusion part 213a may be in contact with a lower surface or an upper surface of the module frame 200.

For example, one surface of the first protrusion part 213a may be located facing a lower surface of the battery cell 110, and the upper surface and the lower surface of the battery cell 110 may be located by being adhesively fixed to the first plate 211a while having a prescribed height from the upper surface and the lower surface of the module frame 200. In other words, a prescribed space may be provided between one surface of the first protrusion part 213a and the lower surface of the battery cell 110, and between the upper surface of the module frame 200 and the upper surface of the battery cell 110, so that the coolant described later can move between them. In this case, the distance between one surface of the first protrusion part 213a and the lower surface of the battery cell 110 may correspond to the distance between the upper surface of the module frame 200 and the upper surface of the battery cell 110.

The other surface of the first protrusion part 213a may be in contact with the bottom part of the module frame 200. Specifically, the other surface of the first protrusion part 213a may be adhesively fixed while being in contact with the bottom part of the module frame 200, whereby the first cooling fin 210a may be fixedly located within the module frame 200.

However, the shape of the first cooling fin 210a is not limited to those illustrated in the figure, and may have a flat plate shape, and any shape can be used without limitation as long as it can fix the battery cell 110 while being in contact with the battery cell 110.

The first cooling fin 210a may be made of metal. Specifically, the first cooling fin 210a may be made of a metal with high thermal conductivity. Therefore, the first cooling fin 210a can directly receive and transfer heat generated in the battery cell 110 during charging and discharging of the battery. When heat is generated, the heat is transferred to the first cooling fin 210a in contact with the side surface of the battery cell 110 to perform primary cooling, and the coolant described below may be in direct contact with the upper part and the lower part of the battery cell 110 to perform secondary cooling. Thereby, direct cooling is possible even in the areas of the upper part and the lower part of the battery cell, which were relatively difficult to cool in the past, thereby improving the cooling efficiency.

The first compression pad 250a may be located at the outermost side of the first battery cell stack 120a. When the battery cells 110 swell due to charging and discharging, the first compression pad 250a can perform the function to absorb the swelling. Specifically, the first compression pad 250a pushes out the side surface part of the module frame 200 while the battery cells 110 swell, thereby preventing the cell case 114 (see FIG. 7) of the battery cell 110 from being broken, and thus improving the safety of the battery module 100.

However, the first compression pad 250a is not limited to being located only at the outermost side of the first battery cell stack 120a, and it can also be located between the battery cells 110 constituting the first battery cell stack 120a.

The first busbar assembly 300a may include a first busbar frame 310a and a first busbar 330a mounted on the first busbar frame 310a.

The first busbar frame 310a is located on one surface of the first battery cell stack 120a, and may be for covering one surface of the first battery cell stack 120a and at the same time, for guiding the connection between the first battery cell stack 120a and an external device. The first busbar frame 310a may be located on one surface and the other surface of the first battery cell stack 120a.

A first busbar 330a may be mounted on a first busbar frame 310a. In specific examples, the inner surface of the first busbar frame 310a may face the first battery cell stack 120a, and the first busbar 330a may be mounted to the outer surface of the first busbar frame 310a.

The first busbar frame 310a may include an electrically insulating material. The first busbar frame 310a may restrict contact with other parts of the battery cells 110 other than the part where the first busbar 330a is joined to the electrode lead (not shown), and can prevent electrical short circuits from occurring.

The first busbar 330a is mounted on the outer surface of the first busbar frame 310a, and may be for electrically connecting the battery cells 110 included in the first battery cell stack 120a, and for electrically connecting the first battery cell stack 120a and an external device circuit. The first busbar 330a is located on the first busbar frame 310a, and the first busbar assembly 300a is covered from the sealing assembly 400 and the end plate 500, which will be described later, so that it can be protected from external impacts, etc., and can minimize a decrease in durability caused by external moisture.

The first busbar 330a may be electrically connected to the first battery cell stack 120a via the electrode lead 130 of the battery cell 110. Specifically, the electrode lead 130 of the battery cell 110 passes through a slit formed in the first busbar frame 310a and then can be bent and connected to the first busbar 330a. The battery cells 110a included in the first battery cell stack 120a may be connected in series or in parallel by the first busbar 330a. The connection method between the electrode lead 130 and the first busbar 330a is not particularly limited, and welding connection can be applied as an example.

The first flexible printed circuit board 350a is configured such that it is extended and mounted in the longitudinal direction of the battery cells 110 to sense the battery cell 110. That is, as shown in FIGS. 8 and 9, the first flexible printed circuit board 350a can sense voltage data or thermal data of the battery cells 110 while being seated on the upper part of the first battery cell stack 120a. In particular, the first flexible printed circuit board 350a may be electrically connected to the first busbar 330a while being bent toward the first busbar frame 310a at the end of the first flexible printed circuit board 350a. Thereby, it is possible to sense the voltage data of respective battery cells 110 and transmit it to the outside.

The second sub-module 100b may include a second battery cell stack 120b and a second bus bar assembly 300b, and the second busbar assembly 300b may include a second busbar frame 310b and a second busbar 330b. Further, the second flexible printed circuit board 350b may be provided to connect the second busbar assemblies 300b.

The second busbar frame 310b is located on one surface of the second battery cell stack 120b, so that it can cover one surface of the second battery cell stack 120b, and simultaneously guide a connection between the second battery cell stack 120b and an external device. The second busbar frame 310b may be located on the front surface or the other surface of the second battery cell stack 120b.

For the components included in the second sub-module 100b, the same or similar structure as the components included in the first sub-module 100a described above can be applied. Therefore, to avoid duplication of explanation, a detailed description of the components included in the second sub-module 100b will be omitted.

As described above, within the battery module 100, the first sub-module 100a and the second sub-module 100b can be electrically connected to each other. That is, the battery module 100 according to the present embodiment corresponds to a twin-model battery module having a first sub-module 100a and a second sub-module 100b.

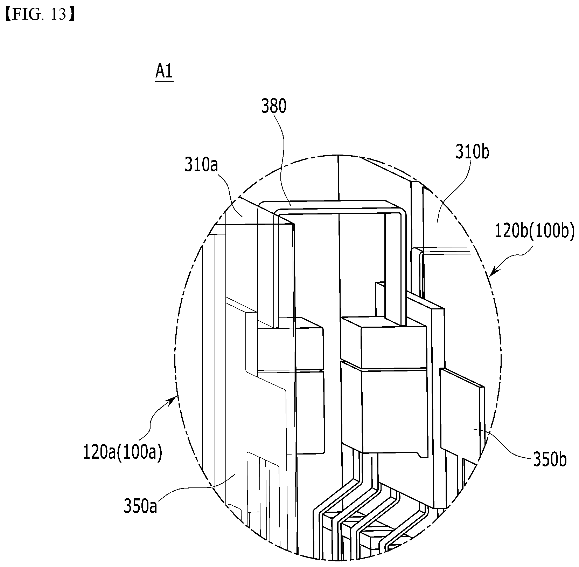

Referring to FIG. 6 and FIGS. 10 to 12, in the present embodiment, the first busbar assembly 300a located on the other side of the first battery cell stack 120a and the second busbar assembly 300b located on one side of the second battery cell stack 120b are electrically connected to each other. In this case, referring to FIG. 11, the first busbar assembly 300a and the second busbar assembly 300b may be electrically connected via a connection cable 380. The connection cable 380 will be described in more detail later in FIG. 13.

Referring to FIGS. 10 and 11, side plates 210 may be provided on both side surfaces of the first sub-module 100a and the second sub-module 100b.

The side plate 210 may be a plate extending along the longitudinal direction of the battery cell 110. Specifically, the length of the side plate 210 may correspond to the sum of the lengths of the first sub-module 100a and the second sub-module 100b.

The side plate 210 may be located facing the battery cell 110 located on the outermost side among the battery cells 110 included in the first sub-module 100a, and the battery cell 110 located on the outermost side among the battery cells 110 included in the second sub-module 100b. Alternatively, the side plate 210 may be located facing the first compression pad 250a included in the first sub-module 100a and the second compression pad 250b included in the second sub-module 100b.

The side plate 210 may be made of metal having rigidity. When the first sub-module 100a and the second sub-module 100b are inserted and mounted into the module frame 200, the side plate 210 can perform the function to protect the outermost battery cells 110 or the compression pads 250a and 250b of the first sub-module 100a and the second sub-module 100b. In addition, since the battery module 100 of the present embodiment is a twin model having a first battery cell stack 120a and a second battery cell stack 120b, and is longer than a length of a typical battery cell stack, it may not be easy to insert and assemble them into the module frame 200. In this case, as shown in FIGS. 10 to 12, the side plate 210 guides the battery cell assembly 120 to be inserted into the module frame 200, which make it possible to easily assemble the battery module without damaging the battery cells 110 and the compression pads 250a and 250b.

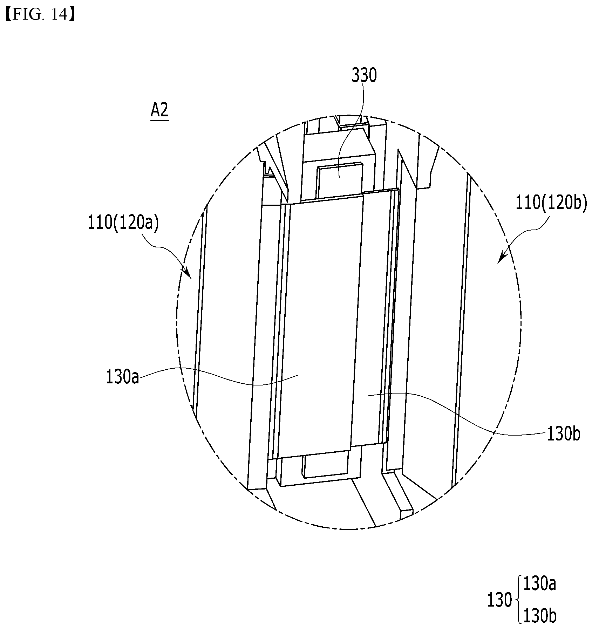

FIG. 13 is a partial view which shows A1 in FIG. 6 in an enlarged manner. FIG. 14 is a partial view which shows A2 in FIG. 6 in an enlarged manner.

Referring to FIGS. 6, 11 and 13, a connection cable 380 is provided between the first sub-module 100a and the second sub-module 100b, so that the first sub-module 100a and the second sub-module 100b can be electrically connected. The connection cable 380 may be a flexible flat cable (FFC).

The connection cable 380 may connect the first flexible printed circuit board 350a located in the first sub-module 100a and the second flexible printed circuit board 350b located in the second sub-module 100b. Both the voltage data or thermal data for the first battery cell stack 120a and the voltage data or thermal data for the second battery cell stack 120b can be transmitted to a BMS (Battery Management System) outside the battery module 100. That is, a LV (low voltage) connection between the first sub-module 100a and the second sub-module 100b may be made by the connection cable 380. Here, the LV connection may refer to a sensing connection for detecting and controlling the voltage of the battery cell.

Further, as mentioned above, the first flexible printed circuit board 350a and the second flexible printed circuit board 350b are connected via the connection cable 380, thereby reducing the overall height of the battery module 100 and increasing the energy density of the battery itself. Further, installation space for the battery module 100 can be ensured, and when the battery module 100 is installed in a device such as an automobile, the traveling performance and fuel efficiency can be improved.

Referring to FIG. 14, the first sub-module 100a and the second sub-module 100b may be electrically connected by connecting electrode leads 130 to each other. Specifically, at least one electrode lead 130a among the battery cells 110 included in the first battery cell stack 120a and at least one electrode lead 130b among the battery cells 110 included in the second battery cell stack 120b can be electrically connected by overlapping each other. In this case, the two electrode leads 130a and 130b may be electrically connected while being in contact with the connection busbar 330. The two electrode leads 130a and 130b and the connection busbar 330 can be welded and joined to each other to electrically connect them.

The two electrode leads 130a and 130b connected to the connection busbar 330 may be electrode leads protruding from the outermost battery cell 110 in the first battery cell stack 120a and the outermost battery cell 110 in the second battery cell stack 120b, respectively. Referring to FIGS. 6 and 14, the connection form of the two electrode leads 130a and 130b and the connection busbar 330 is illustrated as being formed in only one region, but the same connection form may be provided in the opposite region with respect to the stacking direction of the battery cells 110. The electrical connection relationship and the current movement path between the first battery cell stack 120a and the second battery cell stack 120b will be described in more detail below.

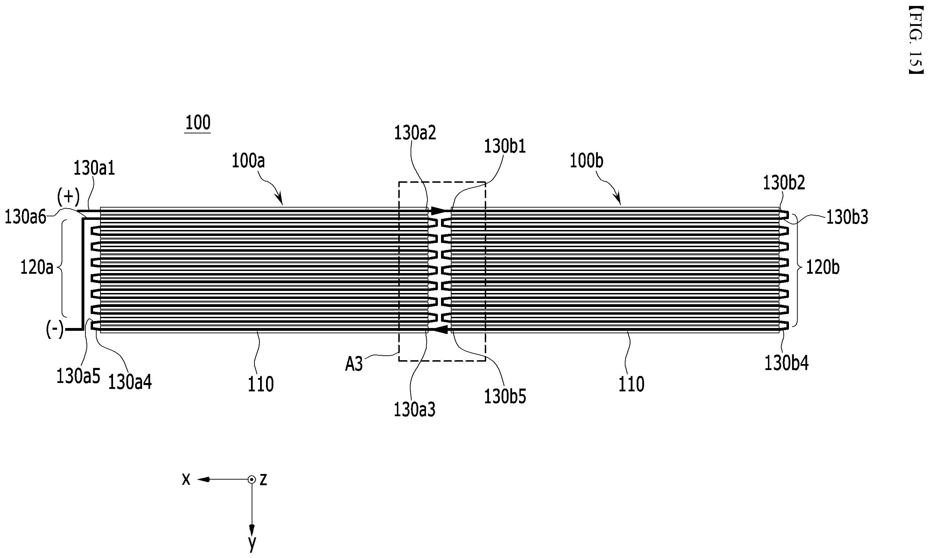

FIG. 15 is a diagram showing the current movement path between the first battery cell stack and the second battery cell stack.

Referring to FIG. 15, in the first sub-module 100a and the second sub-module 100b that are electrically connected, an end in the x-axis direction may be defined as one end, an end in the -x-axis direction may be defined as the other end, and the area where the first sub-module 100a and the second sub-module 100b are electrically connected may be defined as a connection area A3. Below, the connection structure of the electrode leads and the flow of current at one end, the other end, and the connection areaA3 will be described in detail. In particular, for convenience of explanation, the electrode lead included in the first sub-module 100a is referred to as a first electrode lead, and the electrode lead included in the second sub-module 100b is referred to as a second electrode lead.

The first outermost electrode lead 130a1 located at one end of the first sub-module 100a and the first electrode lead 130a6 located adjacent thereto are electrically connected to the outside, so that current may be supplied to the first sub-module 100a and the second sub-module 100b. In this case, current is supplied to the first sub-module 100a from the outside, but since the first electrode lead 130a and the second electrode lead 130b are electrically connected in the connection area A3, current may also flow through the second sub-module 100b.

In the connection area A3, a first electrode lead 130a located at the outermost side of the first battery cell stack 120a of the first sub-module 100a, and a second electrode lead 130b located at the outermost side of the second battery cell stack 120b of the second sub-module 100b may be electrically connected to each other. Specifically, the outermost first electrode leads 130a2 and 130a3 located at the other end of the first sub-module 100a may be electrically connected to the outermost second electrode leads 130b1 and 130b5 located at one end of the second sub-module 100b.

In this case, the electrode leads excluding the outermost first electrode leads 130a2 and 130a3 and the outermost second electrode leads 130b1 and 130b5 may be electrically connected to adjacent electrode leads, respectively. More specifically, at the other end of the first sub-module 100a, the first electrode leads excluding the outermost first electrode leads 130a2 and 130a3 may be electrically connected while forming a pair with adjacent first electrode leads. Even at one end of the second sub-module 100b, similarly, the second electrode leads excluding the outermost second electrode leads 130b1 and 130b5 may be electrically connected while forming a pair with adjacent second electrode leads.

At one end of the first sub-module 100a excluding the connection area A3, a first outermost electrode lead 130a1 electrically connected to an external power source, and the remaining first electrode leads excluding the adjacent first electrode lead 130a6 may be electrically connected to each other. In one example, adjacent first electrode leads may be electrically connected in pairs.

At the other end of the second sub-module 100b excluding the connection area A3, adjacent second electrode leads may be electrically connected to each other. In one example, adjacent second electrode leads may be electrically connected in pairs. Herein, the second outermost electrode leads 130b2 and 130b4 of the second sub-module 100b may also be electrically connected to each other while forming a pair with adjacent second electrode leads.

When the electrical connection of the electrode leads 130a and 130b is formed as described above, electric current may move along the electrical connection of such electrode leads 130a and 130b.

That is, the arrow in this figure refer to the flow of electric current. However, the flow of electric current is not limited to those described in this figure, and as long as a person skilled in the art can change the electrical connection of the electrode lead to easily change the flow of current, any flow current is available.

In the present embodiment, the first battery cell stack 120a and the second battery cell stack 120b arranged along the longitudinal direction in one battery module 100 are arranged to form a twin-model battery module 100. Compared to two battery modules of a single model containing one battery cell stack, the twin-model battery module of the present embodiment can significantly reduce the space required in the longitudinal direction. That is, the battery module 100 according to the present embodiment has the advantage of being able to reduce the number of parts and increase energy density or space utilization as the required space is reduced.

Next, the structure for circulating a coolant inside the battery module according to the present embodiment will be described in detail.

Referring again to FIGS. 4, 5 and 11, the battery module 100 according to the present embodiment includes an inlet 421 and an outlet 461 for circulating a coolant inside the module frame 200. The coolant flows into the inside of the module frame 200 through the inlet 421 and is then discharged to the outside of the battery module 100 through the outlet 461.

The coolant can be in direct contact with the battery cell stack 120, the first and second busbar assemblies 300a and 300b, and other electrical components housed inside the module frame 200, and receive and transfer heat generated therefrom.

The coolant may be a fluid. However, since the coolant is in direct contact with the battery cell stack 120, the first and second busbar assemblies 300a and 300b, and other electrical components within the battery module 100, the coolant needs to be electrically insulated. Therefore, the coolant may be a material that has insulating properties. As an example, the coolant may be an insulating oil.

That is, in the case of the present embodiment, the coolant is in direct contact with the battery cell stack 120, the first and second busbar assemblies 300a and 300b and other electrical components that generate heat within the battery module 100, and can directly cool them while receiving and transferring of heat. Therefore, compared to the case of indirectly cooling the battery module 1 using a heat sink 6, and the like in a conventional battery module 1 (see FIG. 3), the battery module 100 according to the present embodiment can improve the cooling efficiency through direct cooling, thereby extending the life of the battery.

At this time, in the present embodiment, an insulating plate 700 is arranged between the first battery cell stack 120a and the second battery cell stack 120b, and an opening 700H through which the coolant passes is formed in the insulating plate 700. As an example, the opening 700H may be formed in the center of the insulating plate 700. More specifically, the opening 700H may be opened in a rectangular shape where the upper and lower sides are longer than both side sides. That is, the opening 700H may be opened so as to extend long along the direction in which the battery cells 110 are stacked.

The insulating plate 700 may include a material having electrical insulation properties. As an example, the insulating plate 700 may be a plastic injection-molded matter.

More specifically, the inlet 421 and the outlet 461 may be located on opposite sides to each other on the basis of the insulating plate 700. A first battery cell stack 120a may be located between the inlet 421 and the insulating plate 700, and a second battery cell stack 120b may be located between the outlet 461 and the insulating plate 700.

The coolant flowing through the inlet 421 sequentially passes through the first battery cell stack 120a, the opening 700H of the insulating plate 700, and the second battery cell stack 120b, and can be discharged through the outlet 461.

Since both the first battery cell stack 120a and the second battery cell stack 120b are included inside one module frame 200, there is a risk that a short circuit may occur due to contact between the first battery cell stack 120a and the second battery cell stack 120b, or contact between the first busbar assembly 300a located on the other side of the first battery cell stack 120a and the second busbar assembly 300b located on one side of the second battery cell stack 120b.

Further, as described above, the battery module 100 according to the present embodiment includes a first battery cell stack 120a and a second battery cell stack 120b, and has a configuration extending along the longitudinal direction. When the coolant circulates inside the module frame 200, a section in which the flow of the coolant stagnates may be generated between the first battery cell stack 120a and the second battery cell stack 120b.

Therefore, in the present embodiment, an insulating plate 700 having electrical insulation properties was arranged between the first battery cell stack 120a and the second battery cell stack 120b. By using the insulating plate 700, an attempt was made to ensure electrical insulation properties and creepage distance between the first battery cell stack 120a and the second battery cell stack 120b, or between the first busbar assembly 300a and the second busbar assembly 300b.

Moreover, the insulating plate 700 was designed so that an opening 700H through which the coolant passes is formed in the center of the insulating plate 700, thereby attempting to prevent the occurrence of flow stagnation of the coolant in the space between the first battery cell stack 120a and the second battery cell stack 120b. In other words, an attempt was made to secure the flow of coolant and improve the cooling performance.

Meanwhile, together with FIGS. 13 to 15, the electrical connection form between the first battery cell stack 120a and the second battery cell stack 120b, for example, the electrical connection between the outermost first electrode leads 130a2 and 130a3 and the outermost second electrode leads 130b1 and 130b5 in the connection area A3 and the LV connection using the connection cable 380 have been described. Referring to FIG. 11 together with FIGS. 13 to 15, this electrical connection between the first battery cell stack 120a and the second battery cell stack 120b may be achieved through first and second through holes 700H1 and 700H2 formed in the insulating plate 700.

Specifically, the outermost first electrode lead 130a2 in the first battery cell stack 120a and the outermost second electrode lead 130b1 in the second battery cell stack 120b can pass through one of the first through holes 700H1 formed in the insulating plate 700, and be connected to each other. Next, the outermost first electrode lead 130a3 in the first battery cell stack 120a, and the outermost second electrode lead 130b5 in the second battery cell stack 120b can pass through the other of the first through holes 700H1 formed in the insulating plate 700, and be connected to each other. The first through hole 700H1 is preferably opened only to a size that allows the outermost first electrode leads 130a2, 130a3 and the outermost second electrode leads 130b1, 130b5 to pass through.

A connection cable 380 that connects a first flexible printed circuit board 350a located in the first sub-module 100a and a second flexible printed circuit board 350b located in the second sub-module 100b can pass through a second through-hole 700H2 formed in the insulating plate 700. The second through hole 700H2 is preferably opened only to a size that allows the connection cable 380 to barely pass through.

On the other hand, the opening 700H according to the present embodiment may be opened so as to have an area of 5% or more and 60% or less relative to the area of one surface of the insulating plate 700. Here, the area of one surface of the insulating plate 700 may be an area including the opening area of the first and second through holes 700H1 and 700H2. That is, if it is assumed that the first and second through holes 700H1 and 700H2 are closed, the area of one surface of the insulating plate 700 can serve as a reference for the above ratio.

If the area of the opening 700H is less than 5% of the area of one surface of the insulating plate 700, the area through which the coolant passes is too narrow, which may hinder the flow of the coolant. Further, if the area of the opening 700H exceeds 60% of the area of one surface of the insulating plate 700, the area of the opening 700H is too large, and thus, the flow stagnation of the coolant cannot be resolved in the space between the first battery cell stack 120a and the second battery cell stack 120b, and there is a risk that a short circuit will occur between the first sub-module 100a and the second sub-module 100b.

Next, the specific positions where the inlet 421 and outlet 461 according to the present embodiment are formed will be described in detail.

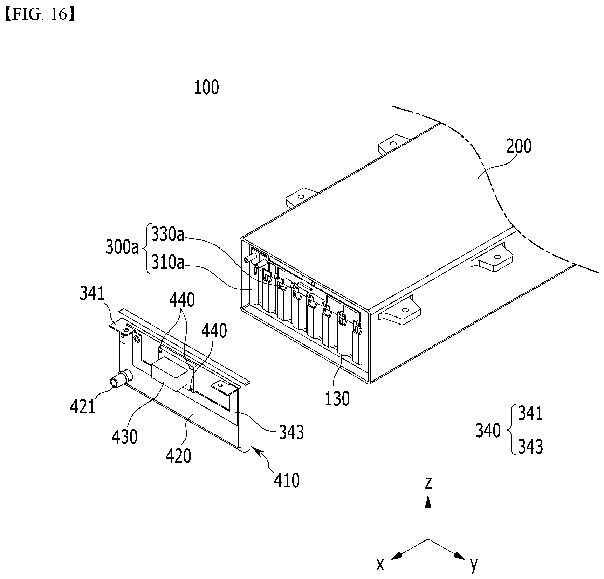

FIG. 16 is a perspective view showing a state in which the first sealing assembly is mounted on one side of the module frame according to an embodiment of the present disclosure.

Referring to FIGS. 4 to 7 and FIG. 16, as described above, the battery module 100 may include a first sealing assembly 410 and a second sealing assembly 450 that cover the opened both sides of the module frame 200, respectively. The inlet 421 may be formed in the first sealing assembly 410, and the outlet 461 may be formed in the second sealing assembly 450.

As described above, the battery cell 110 according to the present embodiment is a pouch-type battery cell, and may include electrode leads 130 protruding in both directions. The direction between the electrode leads 130 protruding in both directions may be referred to as the longitudinal direction of the battery cell 110. The direction parallel to the x-axis may correspond to the longitudinal direction of the battery cell 110. The first sealing assembly 410, the first battery cell stack 120a, the insulating plate 700, the second battery cell stack 120b, and the second sealing assembly 450 can be sequentially located along this longitudinal direction. That is, the coolant flowing in through the inlet 421 formed in the first sealing assembly 410 can sequentially pass through the first battery cell stack 120a, the opening 700H of the insulating plate 700, and the second battery cell stack 120b, and be discharged through the outlet 461 formed in the second sealing assembly 450.

In the battery module 100 according to the present embodiment, the first busbar assembly 300a electrically connected to the battery cell stack may be located on the opened one surface of the module frame 200, and the first sealing assembly 410 may be mounted while covering the first busbar assembly 300a. More specifically, the first sealing assembly 410 may cover the first busbar assembly 300a located on one side of the first battery cell stack 120a.

The first sealing assembly 410 may include a first sealing cover 420, which is a plate that covers the opened one surface of the module frame 200, an inlet 421, which is a hole formed in the first sealing cover 420, and a module connector 430 mounted in one area of the first sealing cover 420.

The first sealing cover 420 is a plate that covers the opened one surface of the module frame 200, and may have a size corresponding to the size of the opened one surface of the module frame 200. That is, the first sealing cover 420 may be mounted on the module frame 200 while covering the opened one surface of the module frame 200. In one example, the first sealing cover 420 may be fitted with the module frame 200.

The inlet 421 may be a hole formed in one area of the first sealing cover 420. The inlet 421 may be a hole that protrudes from the outer surface (x-axis direction) of the first sealing cover 420. That is, the inlet 421 may be a hole that protrudes in a direction opposite to the direction in which the module frame 200 is located. The protruding inlet 421 may pass through the inlet opening 540 formed in the first end plate 510, which will be described later.

The inlet 421 may be located below the center part on the basis of the height of the battery cell stack 120. The inlet 421 may be located close to the lower end of the first sealing assembly 410. Specifically, the inlet 421 may be located below the center part on the basis of the height of the first sealing assembly 410. Here, the height of the battery cell stack 120 or the first sealing assembly 410 refers to the length in the z-axis direction in the drawing.

The module connector 430 can detect phenomena such as overvoltage, overcurrent, and overheating of the battery cell and control them. The module connector 430 is for LV (Low voltage) connection, and the voltage information and temperature information of the battery cell can be transmitted to an external BMS (Battery Management System) through the module connector 430.

The module connector 430 may be mounted on the first sealing cover 420. At this time, the module connector 430 may be mounted by being coupled to the first sealing cover 420 through the coupling member 440. At least a part of the module connector 430 may be exposed to the outside of the first end plate 510, which will be described later, and the first end plate 510 may be provided with a module connector opening 530 for this purpose.

The first sealing cover 420 may be provided with a terminal busbar 340. The terminal busbar 340 may include a first terminal busbar 341 and a second terminal busbar 343, and the first terminal busbar 341 and the second terminal busbar 343 may have different polarities.

The terminal busbar 340 is electrically connected to a busbar or an electrode lead, and thus can be for electrically connecting one battery module 100 to another battery module 100. The first terminal busbar 341 and the second terminal busbar 343 may be respectively connected to a first outermost electrode lead 130a1 (see FIG. 15) located at one end of the first sub-module 100a and a first electrode lead 130a6 (see FIG. 15) located adjacent thereto. In order to electrically connect one battery module 100 to another external battery module 100, at least a part of the terminal busbar 340 may be exposed to the outside of the end plate 510, which will be described later, and the end plate 500 may be provided with a terminal busbar opening 520 for this purpose.

The terminal busbar 340 may further include a protrusion part protruding from the outer surface of the first sealing cover 420. The protrusion part may be exposed to the outside of the battery module 100 through a terminal busbar opening 520, which will be described later. The terminal busbar 340 may be connected to another battery module 100 or a BDU(battery disconnect unit) through a protrusion part exposed through the terminal busbar opening 520, and may form a HV(high voltage) connection therewith.

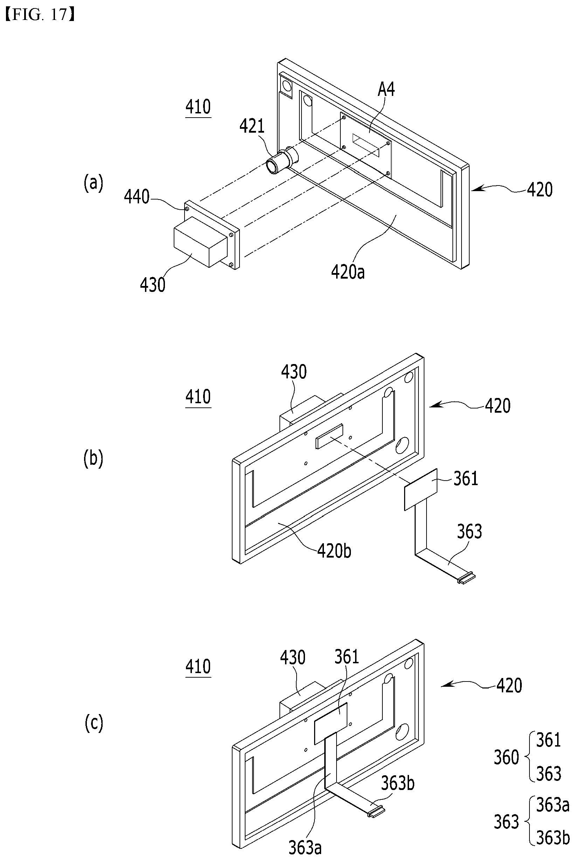

FIG. 17 is a diagram showing the process of assembling the first sealing assembly of FIG. 16. FIG. 17 (a) is a diagram showing a state in which the module connector is coupled to the first sealing cover. FIG. 17(b) is a diagram showing a state in which the sensing unit is coupled to the first sealing cover. FIG. 17(c) is a diagram showing a state in which both the module connector and the sensing unit are coupled to the first sealing cover.

Referring to FIGS. 17 (a), (b), and (c), a module connector 430 is mounted on one surface of the first sealing assembly 410, and a sensing unit 360 is mounted on the other surface of the first sealing assembly 410, so that the module connector 430 and the sensing unit 360 can be electrically connected to each other.

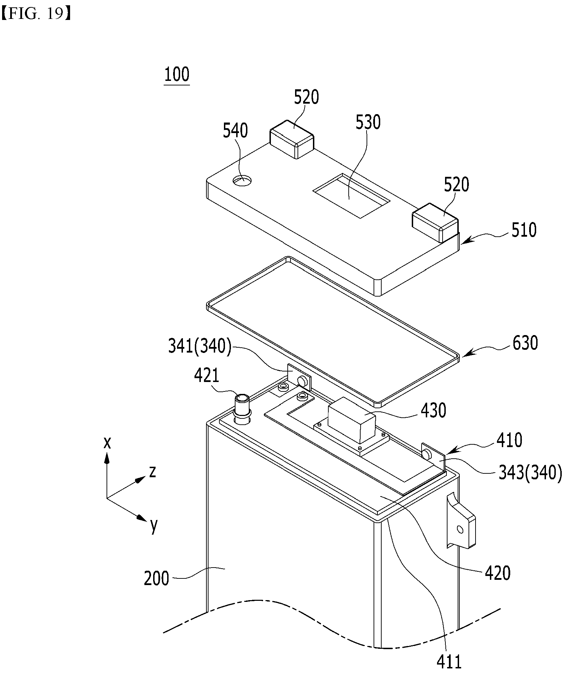

A module connector 430 may be mounted on one surface of the first sealing cover 420. Specifically, the module connector 430 may be mounted on the outer surface 420a of the first sealing cover 420. The outer surface 420a of the first sealing cover 420 is a surface facing the first end plate 510 (see FIG. 19), which will be described later, and may be a surface opposite to the surface facing the module frame 200 (see FIG. 16).

Referring to FIG. 17 (a), the module connector 430 may be mounted and located in the fourth area A4, which is one area of the outer surface 420a of the first sealing cover 420. The fourth area A4 is an area corresponding to the size of the module connector 430, a hole passing through the first sealing cover 420 is provided in the center part of the fourth area A4, and a groove in which the coupling member 440 can be mounted may be provided at the vertex of the fourth area A4. In this case, a coupling member 440 may be provided at the vertex of the module connector 430, and the coupling member 440 may be located in an area corresponding to the groove of the fourth area A4. Therefore, the coupling member 440 can be coupled to a groove in the fourth area A4, and thereby the module connector 430 can be mounted in the fourth area A4.

The coupling member 440 may be any material that couples and fixes the module connector 430 to the fourth area A4, and may be, for example, a bolt, nut, or rivet.

Referring to FIGS. 17(b) and (c), a sensing unit 360 may be mounted on the other surface of the first sealing cover 420. Specifically, the sensing unit 360 may be mounted on the inner surface 420b of the first sealing cover 420. The inner surface 420b of the first sealing cover 420 is a surface that faces the module frame 200 (see FIG. 16), and may be a surface opposite to the surface facing the end plate 510 (see FIG. 19).

The sensing unit 360 may include a sensing printed circuit board 361 and a sensing cable 363 electrically connected to the sensing printed circuit board 361. The sensing printed circuit board 361 may be electrically connected to the module connector 430. The sensing printed circuit board 361 may be located in one area corresponding to the module connector 430. Specifically, the sensing printed circuit board 361 may be located in the fourth area A4. The sensing printed circuit board 361 may be located while being electrically connected to the module connector 430 through a hole in the fourth area A4.

The sensing cable 363 is a cable electrically connected to the sensing printed circuit board 361, and may include a cable connection part 363a and a cable extension part 363b.

The cable connection part 363a is connected to the sensing printed circuit board 361, and may be located while being in contact with the inner surface 420b of the first sealing cover 420. The cable connection part 363a is fixedly located while being in contact with the inner surface 420b of the first sealing cover 420, and may not move arbitrarily within the battery module 100, which may not cause a damage of components.

Specifically, the cable connection part 363a extends from the sensing printed circuit board 361 to the lower part of the first sealing cover 420, and may be bent and extended from the lower part of the first sealing cover 420. At this time, a portion extending from the cable connection part 363a while being bent from the lower part of the first sealing cover 420 can be defined as a cable extension part 363b.

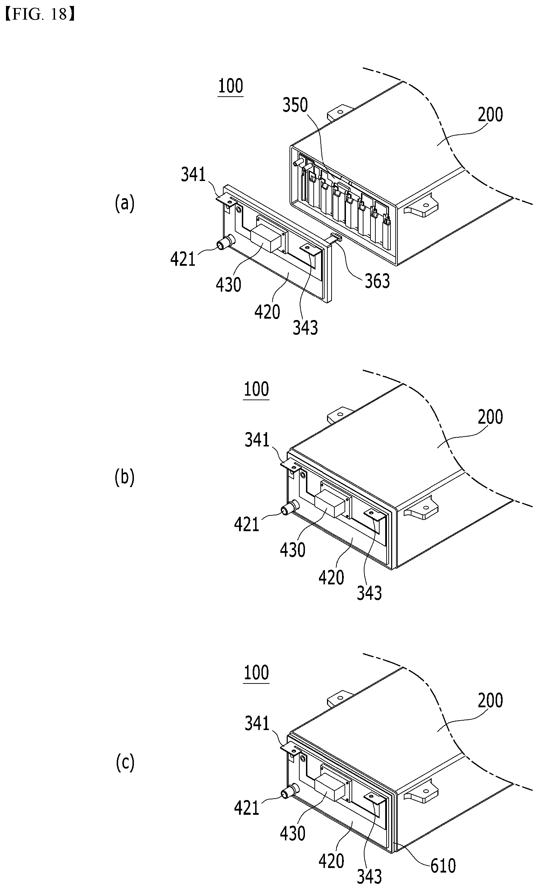

The cable extension part 363b may be electrically connected to the first flexible printed circuit board 350a located in the busbar assembly, and the details will be described later with reference to FIG. 18.

FIG. 18 is a diagram showing a process in which the first sealing assembly of FIG. 16 is mounted on one surface of the module frame. FIG. 18(a) is a diagram showing that a sensing cable is electrically connected to a flexible printed circuit board. FIG. 18(b) is a view showing that the first sealing assembly is coupled to the module frame. FIG. 18(c) is a view showing sealing the first sealing assembly and the module frame.

Referring to FIG. 17(c) and FIG. 18(a) together, the sensing cable 363 may be electrically connected to the flexible printed circuit board 350a located on the busbar structure. In this case, the sensing cable 363 can transmit voltage information, temperature information, and the like of the battery cell acquired from the first flexible printed circuit board 350a to the sensing printed circuit board 361. In this case, the sensing printed circuit board 361 can transmit the above information, and the like acquired from the first flexible printed circuit board 350a to the module connector 430. That is, the sensing unit 360 can transmit battery cell data acquired from the first flexible printed circuit board 350a to the module connector 430.

Therefore, the module connector 430 can transmit data acquired from the first flexible printed circuit board 350a and the sensing unit 360 to a BMS (battery management system), and the BMS can control the charging and discharging of battery cells on the basis of the collected voltage data.

Referring to FIG. 18(a) and FIG. 18(b), the first sealing cover 420 may be mounted on the module frame 200 while covering the opened one surface of the module frame 200. In one example, the first sealing cover 420 may be fitted with the module frame 200. In this case, the edge of the first sealing cover 420 may include a protrusion part that partially protrudes toward the direction coupling to the module frame 200. The edge of the module frame 200 coupled to the first sealing cover 420 may be formed with a step so that the edge protrusion part of the first sealing cover 420 can be inserted. Thus, the first sealing cover 420 and the module frame 200 may be fitted together.

Referring to FIG. 18(c), when the first sealing cover 420 and the opened one side of the module frame 200 are coupled to each other, the first sealing member 610 may be interposed along the edges of the first sealing cover 420 and the module frame 200. When the first sealing cover 420 and the module frame 200 are coupled, a fine gap may be generated between them due to assembly tolerances, and this is sealed with the first sealing member 610 to improve the sealing force of the battery module 100. Therefore, it is possible to prevent leakage of the coolant located inside the battery module 100, prevent the leakage of gas generated inside the battery module 100, and control the direction of gas discharge, thereby improving the safety of the battery module 100.

In this case, the first sealing member 610 may be, for example, an adhesive tape.

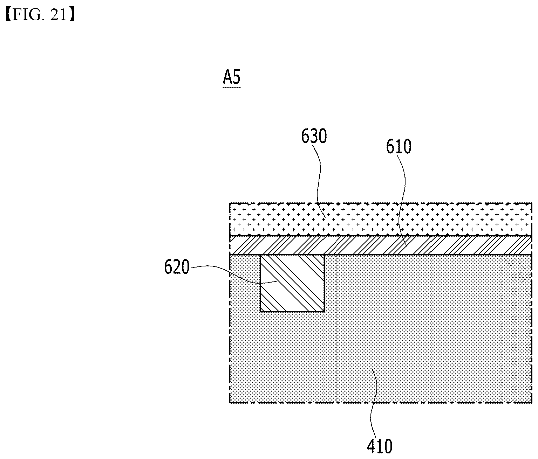

Although not illustrated in this figure, after the first sealing assembly 410 is coupled to the module frame 200 and the edges are sealed with the first sealing member 610, other gaps existing in the first sealing assembly 410 may be sealed with a second sealing member 620 (see FIG. 21). This is to use the second sealing member 620 to seal portions other than the edges of the first sealing assembly 410 that cannot be sealed with the first sealing member 610, and is to further improve the sealing properties of the battery module 100. The second sealing member 620 will be described in more detail with reference to FIG. 21.

FIG. 19 is an exploded perspective view showing a state in which the first end plate is mounted on the first seal assembly according to an embodiment of the present disclosure.

Referring to FIG. 19, in the battery module 100 according to an embodiment of the present disclosure, the first end plate 510 may be located so as to cover the first sealing assembly 410.

The first end plate 510 may include a terminal busbar opening 520, a module connector opening 530, and an inlet opening 540.

The terminal busbar opening 520 may be an opening formed in an area corresponding to the position of the terminal busbar 340 provided in the first sealing assembly 410. The terminal busbar opening 520 has a shape that protrudes from the first end plate 510 toward the outside of the battery module 100, wherein only the upper surface of this protruded shape can be opened. A portion of the terminal busbar 340 may be exposed to the outside through this opening.

The size of the terminal busbar opening 520 may be mainly determined by the circumferential size of the terminal busbar 340. However, for ease of assembly or for manufacturing process reasons, the size of the terminal busbar opening 520 may be larger than the size of the exposed portion of the terminal busbar 340, wherein a gap may be generated between the terminal busbar opening 520 and the terminal busbar 340 that are exposed to the outside.

The module connector opening 530 and the inlet opening 540 are openings provided in the first end plate 510, and are holes passing through the first end plate 510. Specifically, the module connector opening 530 may be an opening formed in an area corresponding to the position of the module connector 430 provided in the first sealing assembly 410, and the inlet opening 540 may be an opening formed in an area corresponding to the position of the inlet 421 provided in the first sealing assembly 410. Thereby, even when the first end plate 510 is mounted, at least a portion of the module connector 430 and the inlet 421 can pass through the module connector opening 530 and the inlet opening 540, and be exposed to the outside.

The sizes of the module connector opening 530 and the inlet opening 540 may be mainly determined by the circumferential sizes of the module connector 430 and the inlet 421. However, for ease of assembly or for manufacturing process reasons, the size of the module connector opening 530 and the inlet opening 540 may be larger than the size of the exposed portion of the module connector 430 and the inlet 421. At this time, a gap may be generated between the module connector opening 530 and the exposed portion of the module connector 430 and between the inlet opening 540 and the exposed portion of the inlet 421.

The terminal busbar 340 and module connector 430 are exposed to the outside through the terminal busbar opening 520 and the module connector opening 530, thereby easily performing HV connection and LV connection with external electrical components. Therefore, the assembly process efficiency can be improved.

The inlet 421 is exposed to the outside of the battery module 100 through the inlet opening 540, and thus, when a coolant flows in through the inlet 421, the coolant can be prevented from leaking between the first sealing assembly 410 and the first end plate 510. Therefore, the coolant may not come into contact with the terminal busbar 340 or the module connector 430 that makes electrical connections to the outside. That is, it is possible to prevent short circuits between the components, and improve the safety of the battery module 100.

A third sealing member 630 may be interposed between the first end plate 510 and the first sealing assembly 410.

The third sealing member 630 may be formed in the shape corresponding to the edge of the first sealing assembly 410 or the edge of the first end plate 510. The third sealing member 630 may be a resin that is coated and then cured to correspond to the edge of the first sealing assembly 410 or the edge of the first end plate 510. Specifically, the third sealing member 630 may be coated onto the first groove 411, which is a groove formed along the edge of the first sealing assembly 410, and may be cured after the first sealing assembly 410 and the first end plate 510 are coupled. In one example, the third sealing member 630 may include an epoxy resin.

That is, the third sealing member 630 is interposed between the first sealing assembly 410 and the first end plate 510, so that the first sealing assembly 410 and the first end plate 510 can be coupled without a gap formed due to assembly tolerances.

Therefore, the sealing properties of the battery module 100 is improved, leakage of the coolant located within the battery module 100 is prevented, and thus, the cooling performance of the battery module 100 can be enhanced. Further, within the battery module 100, it is possible to adjust the venting direction while preventing venting gas generated at a prescribed temperature and pressure or higher from being discharged to the outside through the gap, thereby improving the safety of the battery module 100.

The type and formation method of the third sealing member 630 are not limited to those described above, and may have a shape such as a gasket formed of an elastic member, and any shape is available as long as it can serve to seal the first sealing assembly 410 and the first end plate 510.

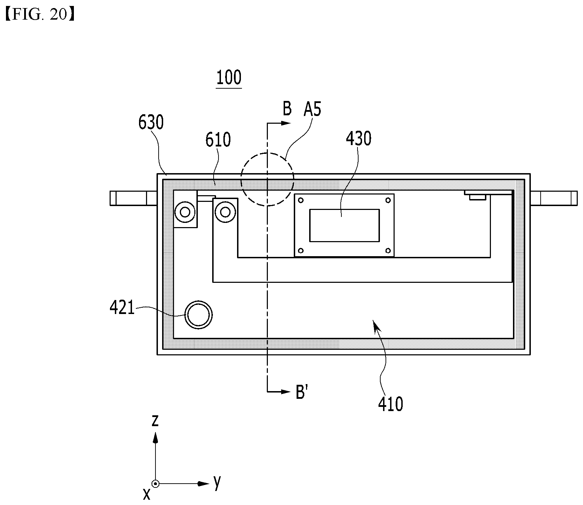

FIG. 20 is a diagram of the configuration excluding the first end plate in FIG. 19 as viewed along the -x axis direction on the yz plane. FIG. 21 is a cross-sectional view showing a portion corresponding to A5 in the cross sections taken along the cutting line B-B' in FIG. 20.

Referring to FIGS. 20 and 21, a first sealing member 610 and a third sealing member 630 may be located along the edge of the first sealing assembly 410, and a second sealing member 620 may be located in one area of the first sealing assembly 410.

In regard to the second sealing member 620, referring to FIG. 21, the second sealing member 620 may be located in one area excluding the edge area of the first sealing assembly 410. That is, the second sealing member 620 can seal the remaining area of the first sealing assembly 410 that is not covered by the first sealing member 610 and the third sealing member 630. Specifically, the second sealing member 620 may seal one area involving a gap in the first sealing assembly 410. However, the area where the second sealing member 620 is located is not limited to the area illustrated in this figure. For example, the second sealing member 620 may seal a portion involving a gap in one area of the first sealing assembly 410 where the module connector 430 is coupled.

In addition to the edge portion of the first sealing assembly 410, the portion where a gap is located is further sealed by the second sealing member 620, so that the sealing properties of the battery module 100 is improved and thus, leakage of the coolant located inside the battery module 100 is prevented. Thereby, the cooling performance of the battery module 100 can be improved. Further, since gas generated inside the battery module 100 at a prescribed temperature and pressure or higher is not discharged through the gap between the first sealing assembly 410 and the first end plate 510, the safety of the battery module 100 can be enhanced.

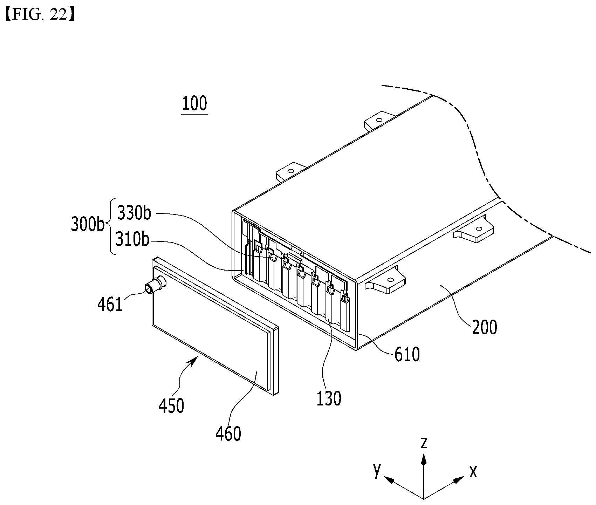

FIG. 22 is a diagram showing a state in which the second sealing assembly is mounted on the other side of the module frame according to an embodiment of the present disclosure.

Referring to FIGS. 5, 6 and 22, the battery module 100 according to an embodiment of the present disclosure may include a second sealing assembly 450 mounted on the opened other surface of the module frame 200. Specifically, in the battery module 100 according to the present embodiment, the second busbar assembly 300b electrically connected to the battery cell assembly may be located on the opened other side of the module frame 200, and the second sealing assembly 450 may be mounted while covering the second busbar assembly 300b.

The second sealing assembly 450 may include a second sealing cover 460 covering the opened other surface of the module frame 200, and an outlet 461 that is a hole formed in the second sealing cover 460.

The second sealing cover 460 is a plate that covers the opened other surface of the module frame 200, and may have a size corresponding to the size of the opened other surface of the module frame 200. That is, the second sealing cover 460 may be mounted on the module frame 200 while covering the opened other surface of the module frame 200. In one example, the second sealing cover 460 may be fitted with the module frame 200.

The outlet 461 may be a hole formed in one area of the second sealing cover 460. The outlet 461 may be a hole having a form protruding along the outer surface (-x-axis direction) of the second sealing cover 460. That is, the outlet 461 may be a hole having a form protruding in the opposite direction to the direction in which the module frame 200 is located. The protruding outlet 461 can pass through an outlet opening 560 formed in the second end plate 550, which will be described later.

The outlet 461 may be located above the center part on the basis of the height of the battery cell stack 120. The outlet 461 may be located adjacent to the upper end of the second sealing assembly 450. Specifically, the outlet 461 may be located above the center part on the basis of the height of the second sealing assembly 450. Although the position of the outlet 461 is not limited thereto, it can ensure that the inside of the module frame 200 is sufficiently filled with a coolant. Here, the height of the battery cell stack 120 or the second sealing assembly 450 refers to the length in the z-axis direction in the drawing.

Comprehensively reviewing the positions of the inlet 421 and the outlet 461 described above, the inlet 421 is located below the center part on the basis of the height of the battery cell stack 120, and the outlet 461 may be located above the center part on the basis of the height of the battery cell stack 120. That is, the inlet 421 may be located adjacent to the lower end of the first sealing assembly 410, and the outlet 461 may be located adjacent to the upper end of the second sealing assembly 450.

If the inlet 421 is located above the center part on the basis of the height of the battery cell stack 120, the coolant flows into the inside of the battery module 100 as if falling from a high position, bubbles may be generated inside the coolant. Such bubbles become a factor that inhibits the cooling effect.

Further, if the outlet 461 is located below the center part on the basis of the height of the battery cell stack 120, the coolant flowing into the battery module 100 is filled only up to the height of the outlet 461 and then escapes to the outside, so that the inside of the battery module 100 may not be filled with a sufficient amount of coolant, which may lead to a decrease in cooling performance.

Therefore, in order to prevent bubbles from occurring in the inflowing coolant and fill the inside of the battery module 100 with a coolant, the inlet 421 is preferably located below the center part on the basis of the height of the battery cell stack 120, and the outlet 461 is preferably located above the center part on the basis of the height of the battery cell stack 120.

When the second sealing assembly 450 and the opened other surface of the module frame 200 are coupled to each other, the first sealing member 610 may be interposed along the edge of the second sealing cover 460 and the module frame 200. When the second sealing cover 460 and the module frame 200 are coupled, a fine gap may be generated between them due to assembly tolerances, and this gap is sealed with a first sealing member 610, thereby capable of improving the sealing properties of the battery module 100. Therefore, leakage of coolant located inside the battery module 100 can be prevented, and the discharge direction of the gas can also be controlled while preventing leakage of venting gas occurring inside the battery module 100, thereby improving the safety of the battery module 100.

**In** this case, the first sealing member 610 may be, for example, an adhesive tape.

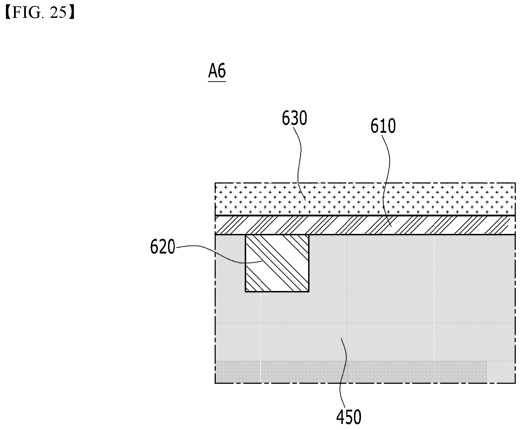

Although not illustrated in this figure, after the second sealing assembly 450 is coupled to the module frame 200 and the edges are sealed with the first sealing member 610, the gap existing on the second sealing assembly 450 may be sealed with a second sealing member 620 (see FIG. 25). This is to use the second sealing member 620 to seal the portions of the second sealing assembly 450 other than the edges that cannot be sealed with the first sealing member 610, and to further improve the sealing properties of the battery module 100. The second sealing member 620 will be explained in more detail with reference to FIG. 25.

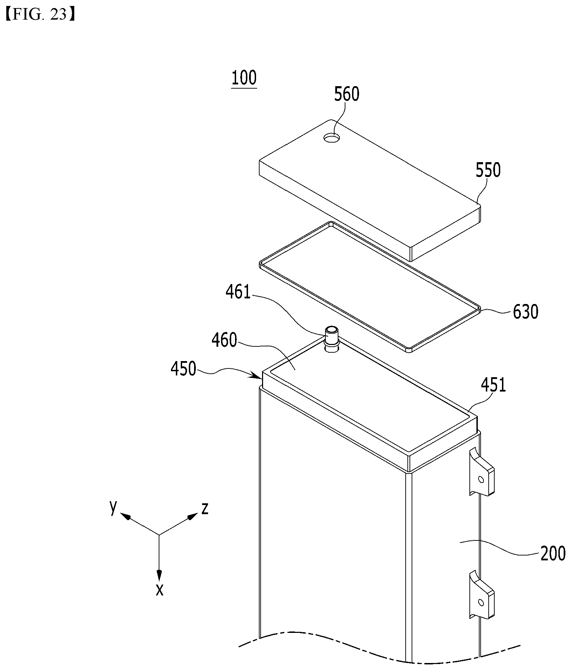

FIG. 23 is an exploded perspective view showing a state in which the second end plate is mounted on the second sealing assembly according to an embodiment of the present disclosure.

Referring to FIG. 23, in the battery module 100 according to an embodiment of the present disclosure, the second end plate 550 may be located so as to cover the second sealing assembly 450.

The second end plate 550 may be formed with an outlet opening 560.

The outlet opening 560 is an opening provided in the second end plate 550, which is a hole passing through the second end plate 550. Specifically, the outlet opening 560 may be an opening formed in an area corresponding to the position of the outlet 461 provided in the second sealing assembly 450. Thereby, even if the second end plate 550 is mounted, at least a part of the outlet 461 may pass through the outlet opening 560, and be exposed to the outside.

The size of the outlet opening 560 may be mainly determined by the circumferential size of the outlet 461. However, for ease of assembly or for manufacturing process reasons, the size of the outlet opening 560 may be larger than the size of the exposed portion of the outlet 461, wherein a gap may be generated between the outlets 461 that are exposed to the outside of the outlet opening 560.

The outlet 461 is exposed to the outside of the battery module 100 through the outlet opening 560 and thus, when the coolant flowing into the module frame 200 is discharged to the outside through the outlet 461, the coolant can be prevented from leaking between the second sealing assembly 450 and the second end plate 550. Therefore, the battery module 100 is not in contact with other electrical components to prevent occurrent of short circuits, thereby improving the safety of the battery module 100.

A third sealing member 630 may be interposed between the second end plate 550 and the second sealing assembly 450.

The third sealing member 630 may be formed in the shape corresponding to the edge of the second sealing assembly 450 or the edge of the second end plate 550. The third sealing member 630 may be a resin that is applied and then cured to correspond to the edge of the second sealing assembly 450 or the edge of the second end plate 550. Specifically, the third sealing member 630 may be applied to the second groove 451, which is a groove formed along the edge of the second sealing assembly 450, and may be cured after the second sealing assembly 450 and the second end plate 550 are coupled. As an example, the third sealing member 630 may be made of an epoxy resin.

That is, the third sealing member 630 is interposed between the second sealing assembly 450 and the second end plate 550, so that the second sealing assembly 450 and the second end plate 550 can be coupled without a gap formed due to assembly tolerances.

Therefore, the sealing properties of the battery module 100 is improved, leakage of the coolant located within the battery module 100 is prevented, and thus, the cooling performance of the battery module 100 can be enhanced. Further, within the battery module 100, the venting direction can be adjusted while preventing venting gas generated at a prescribed temperature and pressure or higher from being discharged to the outside through the gap, thereby improving the safety of the battery module 100.

The type and formation method of the third sealing member 630 are not limited to those described above, and may have a shape such as a gasket formed of an elastic member, and any shape is available as long as it can serve to seal the second sealing assembly 450 and the second end plate 550.

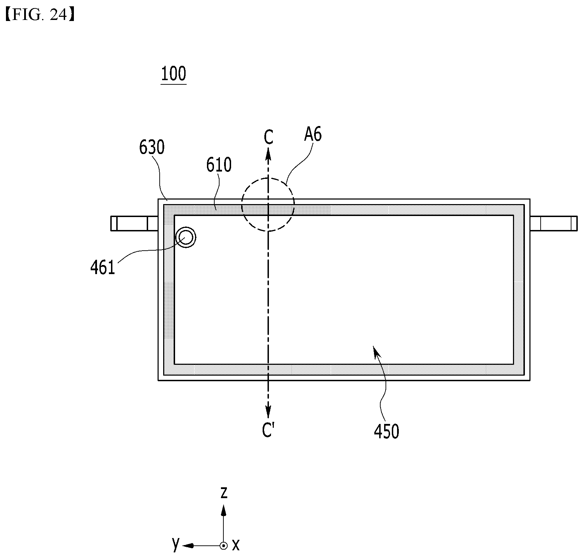

FIG. 24 is a diagram of the configuration excluding the second end plate in FIG. 23 as viewed along the x-axis direction on the yz plane. FIG. 25 is a cross-sectional view showing a portion corresponding to A6 in the cross sections taken along the cutting line C-C' of FIG. 24.

Referring to FIGS. 24 and 25, a first sealing member 610 and a third sealing member 630 may be located along the edge of the second sealing assembly 450, and a second sealing member 620 may be located in one area of the second sealing assembly 450.

In regard to the second sealing member 620, referring to FIG. 25, the second sealing member 620 may be located in one area excluding the edge area of the second sealing assembly 450. That is, the second sealing member 620 can seal the remaining area of the second sealing assembly 450 that is not covered by the first sealing member 610 and the third sealing member 630. Specifically, the second sealing member 620 may seal one area involving a gap in the first sealing assembly 410. However, the area where the second sealing member 620 is located is not limited to the area illustrated in this figure.

In addition to the edge portion of the second sealing assembly 450, the portion where a gap is located is further sealed by the second sealing member 620, so that the sealing properties of the battery module 100 is improved, and leakage of the coolant located inside the battery module 100 is prevented. Therefore, the cooling performance of the battery module 100 can be improved. Further, since gas generated inside the battery module 100 at a prescribed temperature and pressure or higher is not discharged through the gap between the second sealing assembly 450 and the second end plate 550, the safety of the battery module 100 can be enhanced.

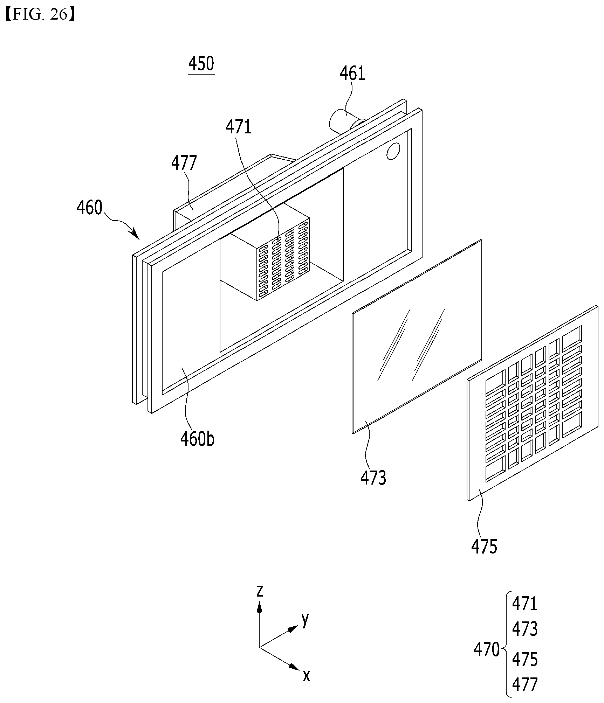

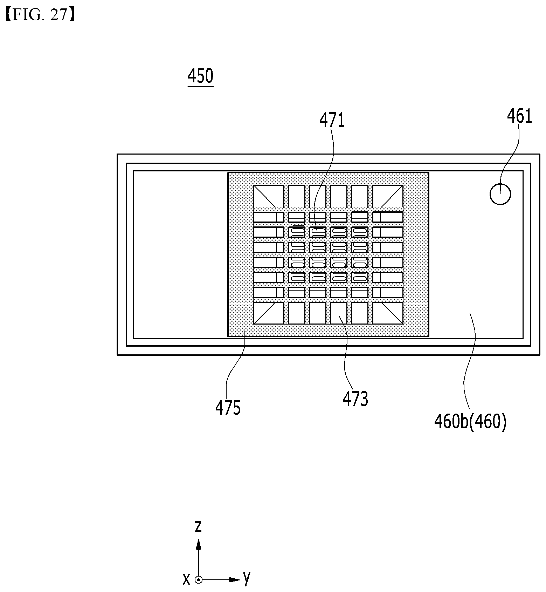

FIG. 26 is an exploded perspective view of a second sealing assembly according to another embodiment of the present disclosure. FIG. 27 is a diagram when FIG. 26 is viewed along the -x axis direction on the yz plane.

Referring to FIGS. 26 and 27, the second sealing assembly 450 according to another embodiment of the present disclosure may further include an outlet 461 and a module venting part 470. Since the outlet 461 is the same as described above, the module venting part 470 will be mainly described below.

The module venting part 470 can discharge gas generated inside the battery module 100 to the outside at a certain temperature and pressure or higher. Specifically, the module venting part 470 can prevent the coolant inside the battery module 100 from leaking while discharging the gas inside the battery module 100 to the outside.

The module venting part 470 may be provided in one area of the second sealing cover 460. The module venting part 470 may include a venting hole 471, a membrane 473, a fixing cover 475, and a venting protrusion part 477.

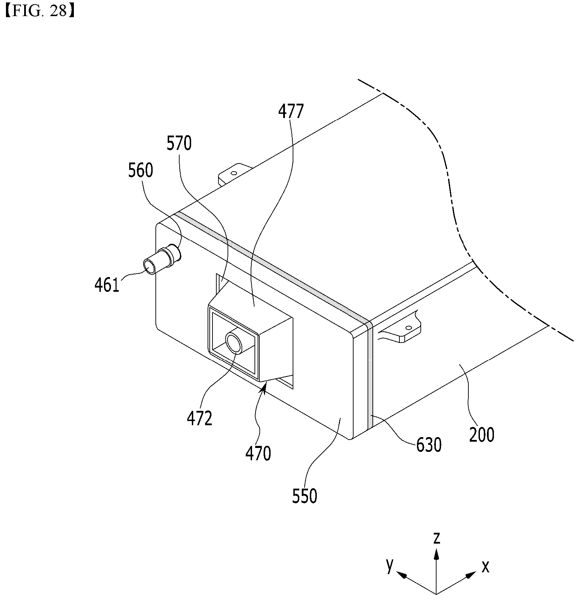

The venting hole 471 may be a passage through which gas generated inside the battery module 100 moves to the outside. The venting hole 471 may be at least one hole provided in one area of the second sealing cover 460. The venting hole 471 may be structurally connected to the module connection part 472 described later in FIG. 28, and the details will be described in detail in FIG. 28.

The membrane 473 may be a thin membrane that allows gas located inside the battery module 100 to be discharged to the outside through the venting hole 471, but prevents the coolant from leaking to the outside.

The membrane 473 may be located between the inner surface 460b of the second sealing cover 460 and the fixing cover 475. The membrane 473 may be located while being in contact with the inner surface 460b of the second sealing cover 460. In this case, one surface of the membrane 473 may be fixedly located while being in contact with the inner surface 460b of the second sealing cover 460, and the other surface of the membrane 473 may be fixedly located while being in contact with one surface of the fixing cover 475.

The fixing cover 475 may primarily allow gas and coolant located inside the battery module 100 to pass therethrough. The fixing cover 475 may be located closest to the battery cell assembly.

The fixing cover 475 may be located while being in contact with the membrane. Specifically, one surface of the fixing cover 475 may be adhesively fixed to the other surface of the membrane 473. In this case, the size of the fixing cover 475 may correspond to the size of the membrane 473 or may be larger than the size of the membrane 473.

The fixing cover 475 may have a shape in which a hole is provided in a flat plate. However, the hole may not be located in the edge area of the fixing cover 475.

The edge area of the fixing cover 475 may be in contact with at least one of the membrane 473 or the inner surface 460b of the second sealing cover 460. In this case, although not illustrated in this figure, an adhesive member may be interposed along the edge area of the fixing cover 475, and the fixing cover 475 may be fixed to the second sealing cover 460 by the adhesive member. The hole provided in the fixing cover 475 can allow to move gas and coolant located inside the battery module 100 to the membrane 473.

The venting protrusion part 477 may be one area where an area corresponding to the module venting part 470 protrudes toward the outside (x-axis direction) of the battery module 100. The venting protrusion part 477 may be one area that protrusively extends outward from one area where the venting hole 471 is provided. A part of the venting protrusion part 477 may pass through the second end plate 550, and be exposed to the outside, so that the venting gas can be completely discharged to the outside of the battery module 100. The details will be explained in more detail based on FIG. 28.

FIG. 28 is a diagram showing a state in which a second end plate is coupled to the second sealing assembly of FIG. 26.

Referring to FIG. 28, when the second end plate 550 is mounted while covering the second sealing assembly 450, at least a portion of the outlet 461 and the module venting portion 470 may pass through the second end plate 550 and be exposed to the outside.

Specifically, the outlet 461 may be partially exposed to the outside through the outlet opening 560 provided in the second end plate 550. The module venting part 470 may pass through the venting opening 570 provided in the second end plate 550 and be partially exposed to the outside.

Since the outlet 461 and the outlet opening 560 are the same as those described above in FIG. 23, the details will be omitted, and the module venting part 470 and venting opening 570 will be described in detail.

The module venting part 470 includes a venting protrusion part 477 that protrudes outward through the venting opening 570, and the venting protrusion part 477 may be provided with a module connection part 472.

The module connection part 472 is a hole that communicates with the above-mentioned venting hole 471, and like the venting protrusion part 477, can pass through the venting opening 570 of the second end plate 550 and be partially exposed to the outside. The module connection part 472 is connected to the pack venting device (not shown) of the battery pack, so that the venting gas moving through the venting hole 471 can be discharged to the outside of the battery module. At this time, at least a part of the module connection part 472 passes through the second end plate 550 and is exposed to the outside, thereby facilitating assembly with the pack venting device. Therefore, the efficiency of the battery assembly process can be improved. Further, the venting gas discharged through the module connection part 472 may not remain in the space between the second end plate 550 and the second sealing assembly 450. Consequently, since venting gas may not remain inside the battery module 100, the safety of the battery module 100 can be improved.

The venting opening 570 is an opening provided in the second end plate 550, and is a hole passing through the second end plate 550. Specifically, the venting opening 570 may be an opening formed in an area corresponding to the position of the venting protrusion part 477 provided in the second sealing assembly 450. In this case, the venting protrusion part 477 passes through the venting opening 570 together with the module connection part 472, so that at least a part of the venting protrusion part 477 and the module connection part 472 may be exposed to the outside.

The size of the venting opening 570 may be mainly determined by the circumferential size of the venting protrusion part 477. However, for ease of assembly or for manufacturing process reasons, the size of the venting opening 570 may be larger than the size of the exposed portion of the venting protrusion part 477, wherein a gap may be generated between the venting opening 570 and the venting protrusion part 477 exposed to the outside.

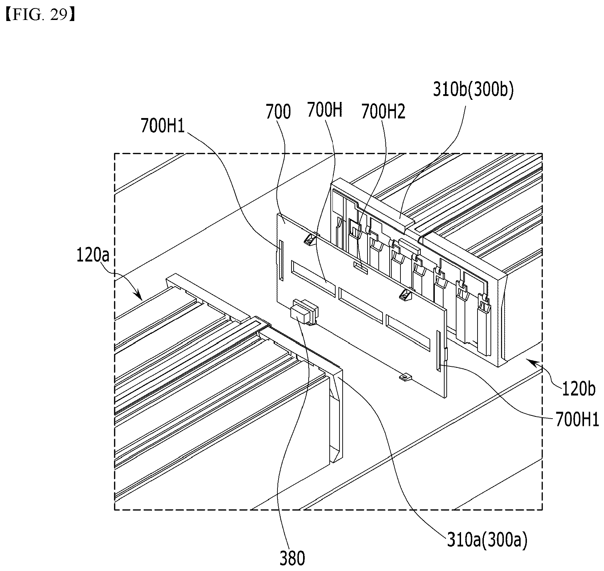

Next, various forms of insulating plates according to embodiments of the present disclosure will be described in detail with reference to FIGS. 29 to 31.

FIG. 29 is a partial perspective view showing the insulating plate located between the first battery cell stack and the second battery cell stack in FIG. 11 in an enlarged manner.

Referring to FIGS. 11 and 29, the insulating plate 700 according to an embodiment of the present disclosure may be in a form that surrounds the opening 700H formed in the center of the insulating plate 700. As described above, the coolant may pass through the opening 700H formed in the center of the insulating plate 700, and flow from the first battery cell stack 120a to the second battery cell stack 120b.

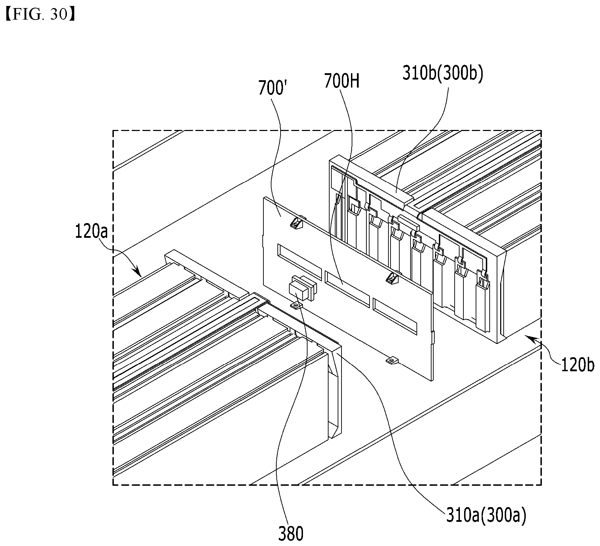

FIG. 30 is a partial perspective view showing an insulating plate included in a battery module according to another embodiment of the present disclosure.

Referring to FIGS. 4 and 30 together, in the insulating plate 700' according to another embodiment of the present disclosure, the first and second through holes 700H1 and 700H2 as shown in FIG. 29 may not be formed, but only an opening 700H may be formed.

The insulating plate 700' according to the present embodiment has no electrical connection between the first battery cell stack 120a and the second battery cell stack 120b, and instead the first battery cell stack 120a and the second battery cell stack 120b can be applied individually to a model of a battery module that realizes electrical connection with external electrical components. In the battery module of the present embodiment, the HV connection and the LV connection in the first battery cell stack 120a can be formed independently of the second battery cell stack 120b. Similarly, the HV connection and the LV connection in the second battery cell stack 120b can be formed independently of the first battery cell stack 120a.

Therefore, since there is no need to perform HV connection and LV connection between the first battery cell stack 120a and the second battery cell stack 120b, it is not necessary to form the first and second through holes in the insulating plate 700'.

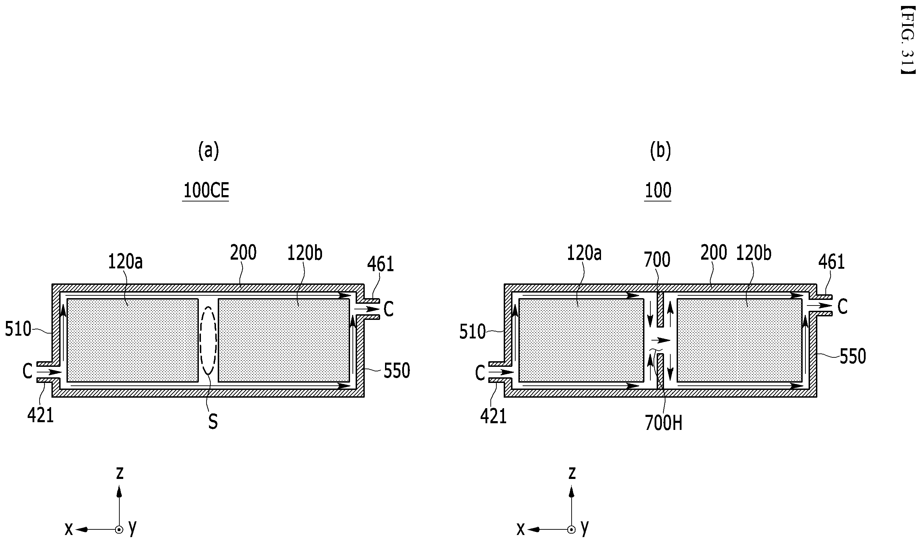

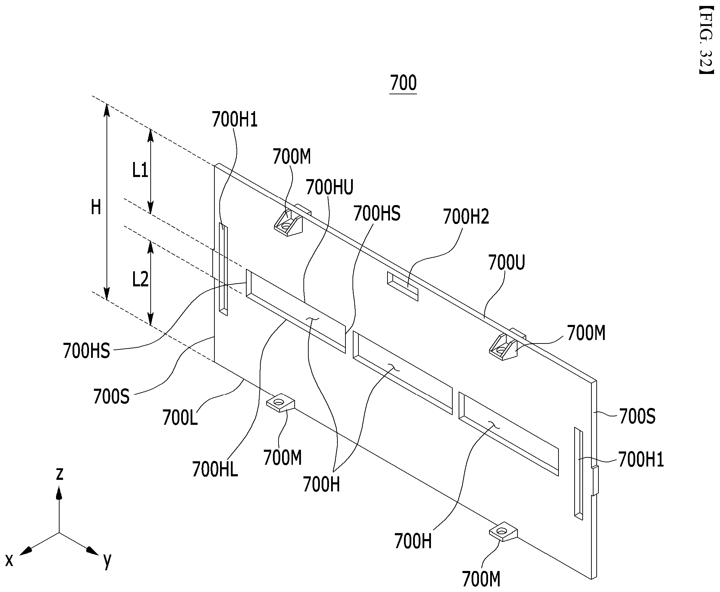

Next, the effects, detailed forms, and the like of the insulating plate according to the present embodiment will be explained in detail with reference to FIGS. 31 and 32.

FIGS. 31 (a) and (b) are diagrams showing a cross section of a battery module according to a comparative example of the present disclosure and a cross section of a battery module according to an embodiment of the present disclosure, respectively.

Referring to FIGS. 4 to 6, FIG. 11 and FIG. 31(a) together, the battery module 100CE according to a comparative example of the present disclosure includes a first battery cell stack 120a, a second battery cell stack 120b, a module frame 200, a first end plate 510 and a second end plate 550. A detailed description of each component included in the battery module 100CE is omitted because it overlaps with the content described above. At this time, unlike the battery module according to the present embodiment, in the battery module 100CE according to this comparative example, an insulating plate is not interposed between the first battery cell stack 120a and the second battery cell stack 120b.

Coolant C flows into the internal space of the module frame 200 through the inlet 421 formed in the first end plate 510, and the inflowing coolant C flows along the internal space of the module frame 200 and is then discharged through the outlet 461 of the second end plate 550. The first battery cell stack 120a and the second battery cell stack 120b are immersed in the coolant C.

At this time, the battery module 100CE has a structure extending along the longitudinal direction including a first battery cell stack 120a and a second battery cell stack 120b. In such a configuration, the space S between the first battery cell stack 120a and the second battery cell stack 120b may be an area where the flow of the coolant C stagnates. Since the coolant C flows along the empty space S, the flow speed is slow, and in severe cases, flow stagnation of the coolant C occurs. If the flow of the coolant stagnates, the cooling performance and cooling efficiency of the corresponding battery module 100CE may decrease.

Referring to FIGS. 4 to 6, FIG. 11 and FIG. 31(a) together, in the case of the battery module 100 according to the present embodiment, the problem of the comparative example can be solved by the insulating plate 700 arranged between the first battery cell stack 120a and the second battery cell stack 120b. In the battery module 100 according to the present embodiment, an insulating plate 700 formed with an opening 700H may be arranged in the space S between the first battery cell stack 120a and the second battery cell stack 120b.

The coolant C flowing through the opening 700H of the insulating plate 700 means that the coolant C flows through a relatively narrow area when compared with the comparative example. That is, as the coolant C flows through a relatively narrow area, its flow speed increases, and stagnation of the flow of the coolant C can be prevented. Ultimately, as the flow congestion of the coolant C is eliminated, the cooling performance and cooling efficiency of the battery module 100 can be increased. That is, the insulating plate 700 according to the present embodiment secures the insulating distance between the first battery cell stack 120a and the second battery cell stack 120b, thereby preventing the occurrence of a short circuit and simultaneously eliminating the flow congestion of the coolant C between the first battery cell stack 120a and the second battery cell stack 120b, thereby enhancing the cooling performance and cooling efficiency.

Further, as described above, the opening 700H may be opened so as to have an area of 5% or more and 60% or less relative to the area of one surface of the insulating plate 700. The range of the ratio of the opening area of the opening 700H is related to the function of eliminating flow congestion of the coolant C. A detailed explanation of the range will be omitted as it overlaps with the above-mentioned contents.

FIG. 32 is a perspective view showing an insulating plate according to an embodiment of the present disclosure.

Referring to FIGS. 9, 11 and 32, an opening 700H is formed in the insulating plate 700 according to the present embodiment, and first and second through holes 700H1 and 700H2, etc. may be further formed as necessary. The opening 700H may be formed in the center of the insulating plate 700. Specifically, the length L1 from the upper side 700U of the insulating plate 700 to the upper side 700HU of the opening 700H may be 25% or more and 49% or less relative to the length H in the height direction of the insulating plate 700. Further, the length L2 from the lower side 700L of the insulating plate 700 to the lower side 700HL of the opening 700H may be 25% or more and 49% or less relative to the length H in the height direction of the insulating plate 700. Here, the height direction of the insulating plate 700 refers to the direction between the upper side 700U and the lower side 700L of the insulating plate 700. More specifically, the height direction of the insulating plate 700 is a direction in which the battery cells 110 are stacked in the first and second battery cell stacks 120a and 120b (direction parallel to the y-axis) and the direction in which the first and second battery cell stacks 120a and 120b are arranged (direction parallel to the x-axis), and may be a direction parallel to the z-axis. The opening 700H may be formed in the center of the insulating plate 700 while satisfying the above range.

Further, the opening 700H may be opened in a rectangular shape where the upper side 700HU and the lower side 700HL are longer than both side sides 700HS. Further, one or more openings 700H may be formed in the insulating plate 700. A plurality of openings 700H may be located along the width direction of the insulating plate 700. Here, the width direction of the insulating plate 700 refers to a direction between both side sides 700S of the insulating plate 700, and may be a direction parallel to the y-axis as the direction parallel to the direction in which the battery cells 110 are stacked in the battery cell stacks 120a and 120b. As an example, in FIG. 32 a state where three openings 700H are located along the width direction of the insulating plate 700 is illustrated.

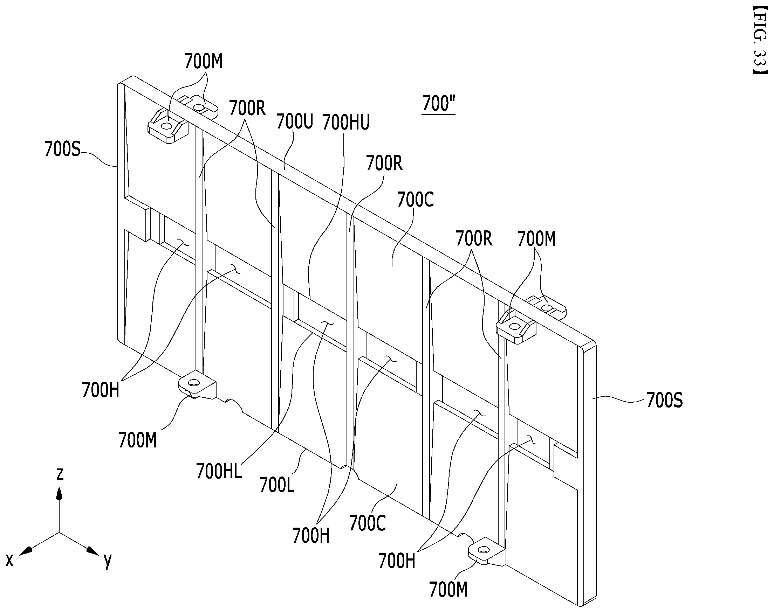

Next, the insulating plate 700" according to a modification embodiment of the present disclosure will be described in detail with reference to FIGS. 33 to 36.

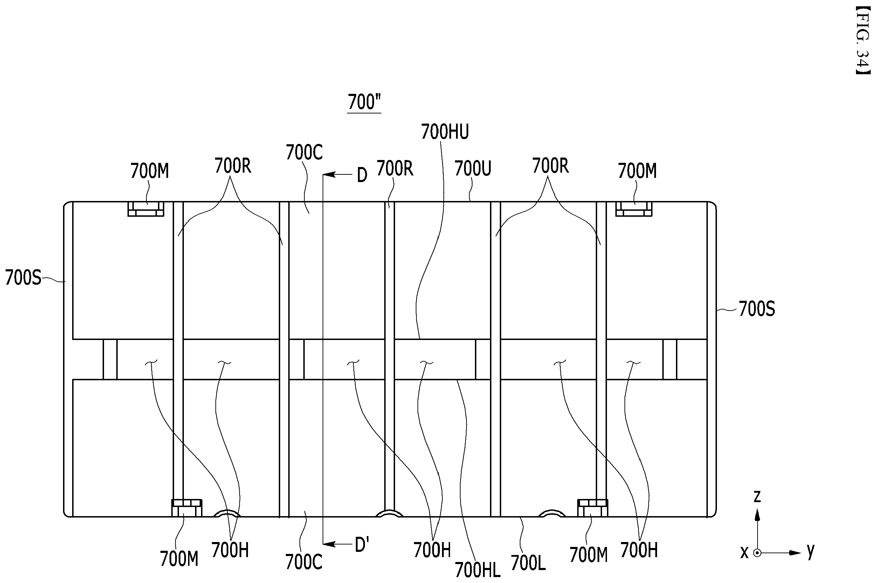

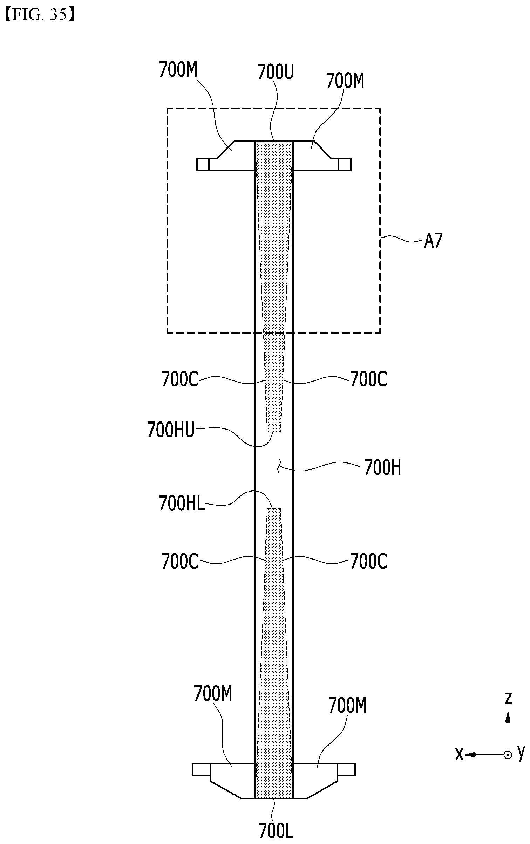

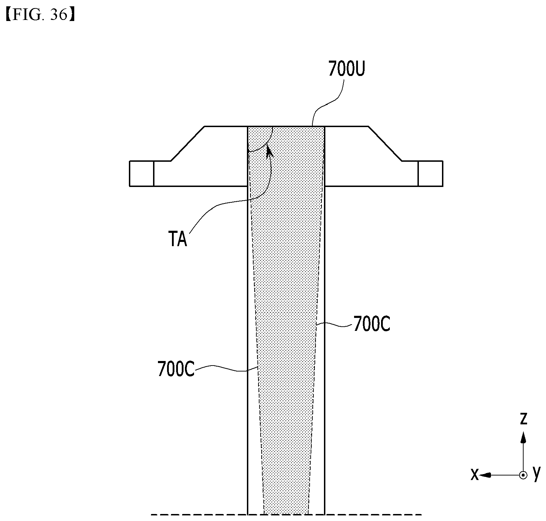

FIGS. 33 and 34 are a perspective view and a front view of an insulating plate according to a modification embodiment of the present disclosure. FIG. 35 is a cross-sectional view taken along the cutting line D-D' of FIG. 34. FIG. 36 is a partial view showing a portion corresponding to A7 in FIG. 35 in an enlarged manner.

Referring to FIGS. 33 to 36 together, an opening 700H is formed in the insulating plate 700" according to a modification embodiment of the present disclosure. At this time, a tilted surface 700C may be formed in at least one of the upper area of the opening 700H or the lower area of the opening 700H of the insulating plate 700". That is, a tilted surface 700C may be formed in either the upper area of the opening 700H or the lower area of the opening 700H of the insulating plate 700", or a tilted surface 700C may be formed in both the upper area of the opening 700H and the lower area of the opening 700H of the insulating plate 700".

Specifically, a tilted surface 700C may be formed in at least a part of the area from the upper side 700U or the lower side 700L of the insulating plate 700" to the upper side 700HU or the lower side 700HL of the opening 700H, such that the thickness of the insulating plate 700" becomes narrower as it goes in the direction from the upper side 700U or the lower side 700L of the insulating plate 700" to the upper side 700HU or the lower side 700HL of the opening 700H. Here, the thickness of the insulating plate 700" refers to the thickness of the plate-shaped insulating plate 700", and may correspond to the length of the insulating plate 700" along the direction parallel to the x-axis direction in the drawing.

More specifically, a tilted surface 700C may be formed in at least a part of the area from the upper side 700U of the insulating plate 700" to the upper side 700HU of the opening 700H, such that the thickness of the insulating plate 700" becomes narrower it goes in the direction from the upper side 700U of the insulating plate 700" to the upper side 700HU of the opening 700H (-z-axis direction in the drawing). Further, a tilted surface 700C may be formed in at least a part of the area from the lower side 700L of the insulating plate 700" to the lower side 700HL of the opening 700H, such that the thickness of the insulating plate 700" becomes narrower as it goes in the direction from the lower side 700L of the insulating plate 700" to the lower side 700HL of the opening 700H (+z-axis direction in the drawing).

That is, the tilted surface 700C may be formed in either the upper area of the opening 700H or the lower area of the opening 700H, or may be formed in both the upper area of the opening 700H and the lower area of the opening 700H. Further, the tilted surface 700C may be formed on either of both surfaces of the insulating plate 700" located on opposite sides to each other, or may be formed on both surfaces of the insulating plate 700" located on opposite sides to each other. Here, the both surfaces of the insulating plate 700" located on opposite sides to each other mean each of the surfaces facing a first battery cell stack 120a (see FIG. 11) and a second battery cell stack 120b (see FIG. 11) among the insulating plate 700".

As the tilted surface 700C is formed on the insulating plate 700" according to the present embodiment, the flowability of the coolant flowing through the opening 700H of the insulating plate 700" can be improved. That is, in the space between the first battery cell stack 120a (see FIG. 11) and the second battery cell stack 120b (see FIG. 11), the tilted surface 700C can guide the flow of the coolant so that the coolant flows well toward the opening 700H of the insulating plate 700".

On the other hand, the tilted angle TA formed by the tilted surface 700C may be 80 degrees or more and 90 degrees or less, or may be 85 degrees or more and 87 degrees or less. As shown in FIG. 36, the tilted angle TA formed by the tilted surface 700C means an acute angle formed between the tilted surface 700C and the ground. Here, the ground may correspond to a surface parallel to the xy plane.

In the insulating plate 700" according to the present embodiment, the area, position, number, etc. of the tilted surfaces 700C can be changed as appropriate in consideration of a degree that a coolant flows, depending on the size of the internal space of the battery module 100 through which a coolant flows, the material characteristics of the coolant, and the like.

On the other hand, the insulating plate 700" according to the present embodiment may include at least one rib 700R extending along the height direction of the insulating plate 700". That is, the insulating plate 700" may include one rib 700R or a plurality of ribs 700R. When a plurality of ribs 700R are formed, the plurality of ribs 700R may be arranged while maintaining a prescribed distance along the width direction. The opening 700H may be divided into a plurality of numbers by the ribs 700R.

At least one rib 700R according to the present embodiment may be provided to supplement the rigidity of the insulating plate 700". The number or thickness of the ribs 700R are not particularly limited, and can be adjusted appropriately in consideration of the size and material of the insulating plate 700". In particular, because the thickness of the portion of the insulating plate 700" on which the tilted surface 700C is formed is thin, at least one rib 700R for supplementing rigidity may be preferably formed on the insulating plate 700" on which the tilted surface 700C is formed. However, the present disclosure is not limited thereto, and the at least one rib 700R may be formed, for example, on the insulating plate 700 of FIG. 32, where the tilted surface 700C is not formed.

On the other hand, referring again to FIGS. 29, 32, and 33, the insulating plates 700 and 700" according to the present embodiment may be fixed to at least one of the first busbar frame 310a or the second busbar frame 310b. For example, the insulating plates 700 and 700" according to the present embodiment may include a mounting part 700M fixed to the first busbar frame 310a or the second busbar frame 310b. The mounting part 700M may protrude from the insulating plates 700 and 700" toward the first busbar frame 310a or the second busbar frame 310b, and such a mounting part 700M may be formed with a fastening hole.

As an example, a part of the mounting parts 700M may protrude toward the first busbar frame 310a, and the rest of the mounting parts 700M may protrude toward the second busbar frame 310b. The bolt may pass through the fastening hole of the mounting part 700M protruding toward the first busbar frame 310a, and then be fastened to the first busbar frame 310a. Further, another bolt may pass through the fastening hole of the mounting portion 700M protruding toward the second busbar frame 310b and then be fastened to the second busbar frame 310b. In particular, the mounting part 700M may be formed adjacent to the upper side 700U or the lower side 700L of the insulating plates 700 and 700". Thereby, bolts that have passed through the mounting part 700M may be fastened to adjacent areas on the upper side or the lower side of the first busbar frame 310a or the second busbar frame 310b.

In the same manner as above, the insulating plates 700 and 700" may be fixed to at least one of the first busbar frame 310a or the second busbar frame 310b. However, this is an example in which the insulating plates 700 and 700" are fixed to at least one of the first busbar frame 3 10a or the second busbar frame 310b, and may be fixed in other ways.

The terms representing directions such as the front side, the rear side, the left side, the right side, the upper side, and the lower side have been used in the present embodiment, but the terms used are provided simply for convenience of description and may become different according to the position of an object, the position of an observer, or the like.

The one or more battery modules according to embodiments of the present disclosure described above can be mounted together with various control and protection systems such as a BMS (battery management system), a BDU(battery disconnect unit), and a cooling system to form a battery pack.

The battery module or the battery pack can be applied to various devices. Specifically, it can be applied to vehicle means such as an electric bike, an electric vehicle, and a hybrid electric vehicle, or an ESS (Energy Storage System) and may be applied to various devices capable of using a secondary battery, without being limited thereto.

Although the invention has been described in detail with reference to preferred embodiments thereof, the scope of the present disclosure is not limited thereto, and various modifications and improvements can be made by those skilled in the art using the basic concepts of the present disclosure, which are defined in the appended claims, which also falls within the scope of the present disclosure.

### [Description of Reference Numerals]

100: battery module
110: battery cell
120: battery cell stack
120a: first battery cell stack
120b: second battery cell stack
200: module frame
300a: first busbar assembly
300b: second busbar assembly
400: sealing assembly
500: end plate
610: first sealing member
620: second sealing member
630: third sealing member
700: insulating plate
700H: opening

## Claims

1. A battery module comprising:
a battery cell stack that includes a first battery cell stack and a second battery cell stack in which a plurality of battery cells are stacked;
a module frame that houses the battery cell stack; and
an inlet and an outlet that circulate a coolant inside the module frame,
wherein the coolant flows into the inside of the module frame through the inlet, and is discharged through the outlet, and
wherein an insulating plate is arranged between the first battery cell stack and the second battery cell stack, and an opening through which the coolant passes is formed in the insulating plate.

2. The battery module according to claim 1, wherein:
the opening is formed in the center of the insulating plate.

3. The battery module according to claim 1, wherein:
the inlet and the outlet are located on opposite sides to each other on the basis of the insulating plate.

4. The battery module according to claim 3, wherein:
the first battery cell stack is located between the inlet and the insulating plate, and
the second battery cell stack is located between the outlet and the insulating plate.

5. The battery module according to claim 4, wherein:
the coolant flowing through the inlet sequentially passes through the first battery cell stack, the opening of the insulating plate, and the second battery cell stack, and is discharged through the outlet.

6. The battery module according to claim 1, wherein:
the inlet is located below a center part on the basis of a height of the battery cell stack, and
the outlet is located above the center part on the basis of the height of the battery cell stack.

7. The battery module according to claim 1, wherein:
the first battery cell stack and the second battery cell stack are arranged along a direction perpendicular to the direction in which the battery cells in the first battery cell stack or the second battery cell stack are stacked.

8. The battery module according to claim 7, wherein:
a first through hole and a second through hole are formed in the insulating plate, and
electrical connection between the first battery cell stack and the second battery cell stack is made through the first through hole and the second through hole.

9. The battery module according to claim 1, further comprising a first sealing assembly and a second sealing assembly respectively covering the opened both sides of the module frame,
wherein the inlet is formed in the first sealing assembly, and the outlet is formed in the second sealing assembly.

10. The battery module according to claim 9, wherein:
the inlet is located below a center part on the basis of a height of the first sealing assembly, and
the outlet is located above the center part on the basis of a height of the second sealing assembly.

11. The battery module according to claim 9, wherein:
the battery cell is a pouch-type battery cell, and includes electrode leads protruding in both directions, and
when the direction between the electrode leads is defined as a longitudinal direction, the first sealing assembly, the first battery cell stack, the insulating plate, the second battery cell stack, and the second sealing assembly are sequentially located along the longitudinal direction.

12. The battery module according to claim 1, wherein:
the coolant is an insulating oil.

13. The battery module according to claim 1, wherein:
the coolant is in direct contact with the battery cell stack housed within the module frame.

14. The battery module according to claim 1, wherein:
the insulating plate has a configuration in which the insulating plate surrounds the periphery of the opening formed in the center of the insulating plate.

15. The battery module according to claim 1, wherein:
the opening is opened so as to have an area of 5% or more and 60% or less relative to the area of one surface of the insulating plate.

16. The battery module according to claim 1, wherein:
the length from an upper side of the insulating plate to the upper side of the opening is 25% or more and 49% or less of an length according to a height direction of the insulating plate, and
a length from a lower side of the insulating plate to a lower side of the opening is 25% or more and 49% or less of the length according to the height direction of the insulating plate.

17. The battery module according to claim 1, wherein:
a tilted surface is formed in at least a part of an area from an upper side of the insulating plate to an upper side of the opening, such that a thickness of the insulating plate becomes narrower as it goes in the direction from the upper side of the insulating plate to the upper side of the opening.

18. The battery module according to claim 1, wherein:
a tilted surface is formed in at least a part of an area from a lower side of the insulating plate to a lower side of the opening, such that a thickness of the insulating plate becomes narrower as it goes in the direction from the lower side of the insulating plate to the lower side of the opening.

19. The battery module according to claim 1, wherein:
the insulating plate includes at least one rib extending along a height direction of the insulating plate.

20. The battery module according to claim 1, further comprising a first busbar frame located on one surface of the first battery cell stack and a second busbar frame located on one surface of the second battery cell stack,
wherein the insulating plate is fixed to at least on of the first busbar frame or the second busbar frame.

21. A battery pack comprising the battery module according to claim 1.
